# EUROPEAN PATENT APPLICATION

(11) **EP 4 510 531 A1**
(43) Date of publication of application: **19.02.2025**
(21) Application number: 23787604.0
(22) Date of filing: 07.04.2023
(51) Int. Cl.: H04L 51/04

(54) **MESSAGE PROCESSING METHOD AND APPARATUS, ELECTRONIC DEVICE, AND READABLE STORAGE MEDIUM**

(30) Priority: 11.04.2022 CN 202210375326
(71) Applicant: Vivo Mobile Communication Co., Ltd., Dongguan, Guangdong 523863 (CN)
(72) Inventor: ZHAO, Junkui, Dongguan, Guangdong 523863 (CN)
(74) Representative: Conti, Marco
(86) International application number: PCT/CN2023/087017
(87) International publication number: WO 2023/197960

(57) **Abstract**

This application discloses a message processing method and apparatus, an electronic device, and a readable storage medium, and relates to the field of communication technologies. The message processing method is applied to a message sender. The method includes: displaying a conversation message interface of a target conversation in which a first user participates, where the conversation message interface includes conversation messages sent by the first user; and updating, in response to a first input by the first user on a target conversation message of the conversation messages, display of the target conversation message based on a target message recall mode. The target message recall mode includes: a batch recall mode, a partial recall mode, or a partial user recall mode.

## Description

### CROSS-REFERENCE TO RELATED APPLICATIONS

This application claims the priority of Chinese Patent Application No. 202210375326.7 in China on April 11, 2022, the entire content of which is hereby incorporated by reference.

### TECHNICAL FIELD

This application relates to the field of communication technologies, and specifically, to a message processing method and apparatus, an electronic device, and a readable storage medium.

### BACKGROUND

With the development of communication technologies and Internet technologies, instant messaging applications have emerged. Through instant messaging applications, conversational interaction between two users or conversational interaction between a plurality of users can be implemented.

Currently, users may missend a message when using an instant messaging application for communication, and can recall the message by using a message recall function in the related art. However, the message recall function in the related art is single. In a case that a plurality of messages are missent, the messages need to be recalled one by one and then sent after being edited one by one. The operation is complex, and efficiency of recall and editing is low, resulting in low conversation communication efficiency.

### SUMMARY

An objective of embodiments of this application is to provide a message processing method and apparatus, an electronic device, and a readable storage medium, which can resolve the problem of low conversation communication efficiency caused by the message recall function in the related art.

According to a first aspect, an embodiment of this application provides a message processing method, applied to a message sender. The method includes:
displaying a conversation message interface of a target conversation in which a first user participates, where the conversation message interface includes conversation messages sent by the first user; and
updating, in response to a first input by the first user on a target conversation message of the conversation messages, display of the target conversation message based on a target message recall mode, where
the target message recall mode includes: a batch recall mode, a partial recall mode, or a partial user recall mode.

According to a second aspect, an embodiment of this application provides a message processing apparatus, applied to a message sender. The apparatus includes:
a first display module, configured to display a conversation message interface of a target conversation in which a first user participates, where the conversation message interface includes conversation messages sent by the first user; and
a second display module, configured to update, in response to a first input by the first user on a target conversation message of the conversation messages, display of the target conversation message based on a target message recall mode, where
the target message recall mode includes: a batch recall mode, a partial recall mode, or a partial user recall mode.

According to a third aspect, an embodiment of this application provides an electronic device. The electronic device includes a processor and a memory. The memory has a program or an instruction executable on the processor and stored therein. When the program or the instruction is executed by the processor, the steps of the method according to the first aspect are implemented.

According to a fourth aspect, an embodiment of this application provides a readable storage medium. The readable storage medium has a program or an instruction stored therein. When the program or the instruction is executed by a processor, the steps of the method according to the first aspect are implemented.

According to a fifth aspect, an embodiment of this application provides a chip. The chip includes a processor and a communication interface. The communication interface is coupled to the processor. The processor is configured to execute a program or an instruction, to implement the method according to the first aspect.

According to a sixth aspect, an embodiment of this application provides a computer program/program product. The program/program product is stored in a storage medium. The program/program product is executed by at least one processor, to implement the method according to the first aspect.

In the embodiments of this application, after the first input by the first user on the target conversation message is received, the display of the target conversation message is updated based on the target message recall mode, that is, functions such as recalling and resending the target conversation message are implemented. The target message recall mode includes a batch recall mode, a partial recall mode, or a partial user recall mode. Therefore, users can select different target message recall modes based on individual requirements, to meet different recall requirements of the users for the target conversation message, thereby simplifying a recall operation process, and improving the conversation communication efficiency.

### BRIEF DESCRIPTION OF THE DRAWINGS

FIG. 1 is a schematic flowchart of a message processing method according to an embodiment of this application;
FIG. 2 is a schematic diagram 1 of message recall mode options according to an embodiment of this application;
FIG. 3 is a schematic diagram 2 of message recall mode options according to an embodiment of this application;
FIG. 4 is a schematic diagram of at least two first message units according to an embodiment of this application;
FIG. 5 is a schematic diagram of display of a recall prompt according to an embodiment of this application;
FIG. 6 is a schematic diagram after a first target message unit is recalled according to an embodiment of this application;
FIG. 7 is a schematic diagram of a first input according to an embodiment of this application;
FIG. 8 is a schematic diagram of at least two second message units according to an embodiment of this application;
FIG. 9 is a schematic diagram of resent target message content according to an embodiment of this application;
FIG. 10 is a schematic diagram of a sixth input according to an embodiment of this application;
FIG. 11 is a schematic diagram of a third message unit according to an embodiment of this application;
FIG. 12 is a schematic diagram of conversation member identifiers according to an embodiment of this application;
FIG. 13 is a schematic diagram of an eighth input according to an embodiment of this application;
FIG. 14 is a schematic diagram of a target quantity and a target time period according to an embodiment of this application;
FIG. 15 is a schematic diagram after at least two conversation messages are recalled according to an embodiment of this application;
FIG. 16 is a schematic diagram of displaying a plurality of recalled conversation messages in a conversation message input region according to an embodiment of this application;
FIG. 17 is a schematic diagram of a plurality of conversation messages with an adjusted order;
FIG. 18 is a schematic diagram of resending a plurality of conversation messages;
FIG. 19 is a schematic diagram 1 of message update reminder information according to an embodiment of this application;
FIG. 20 is a schematic diagram of a target conversation message before update according to an embodiment of this application;
FIG. 21 is a schematic diagram 2 of message update reminder information according to an embodiment of this application;
FIG. 22 is a schematic structural diagram of a message processing apparatus according to an embodiment of this application;
FIG. 23 is a schematic structural diagram of an electronic device according to an embodiment of this application; and
FIG. 24 is a schematic diagram of a hardware structure of an electronic device implementing the embodiments of this application.

### DETAILED DESCRIPTION

The technical solutions in embodiments of this application are clearly and described below with reference to the accompanying drawings in the embodiments of this application. Apparently, the described embodiments are some rather than all of the embodiments of this application. All other embodiments obtained by a person of ordinary skill in the art based on the embodiments of this application fall within the protection scope of this application.

In the specification and claims of this application, terms such as "first" and "second" are used to distinguish similar objects, but are not used to describe a specific sequence or order. It should be understood that data used in such a way is exchangeable in a proper case, so that the embodiments of this application can be implemented in an order different from that shown or described herein. The objects distinguished by using "first", "second" and the like are usually of one type, and the number of the objects is not limited. For example, one or more than first objects may be provided. In addition, "and/or" in this specification and the claims represents at least one of the connected objects, and the character "/" generally indicates an "or" relationship between the associated objects.

A message processing method and apparatus, an electronic device, and a readable storage medium provided in the embodiments of this application are described in detail below through specific embodiments and application scenarios thereof with reference to the accompanying drawings.

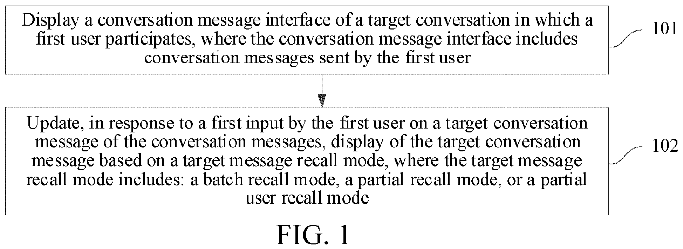

FIG. 1 is a schematic flowchart of a message processing method according to an embodiment of this application. As shown in FIG. 1, according to an aspect, an embodiment of this application provides a message processing method, applied to a message sender. An example in which the method is applied to an electronic device is used for description in this embodiment. The message processing method includes the following steps:

Step 101: Display a conversation message interface of a target conversation in which a first user participates, where the conversation message interface includes conversation messages sent by the first user.

In this embodiment, optionally, an instant messaging application runs on the electronic device. The first user logs in to the instant messaging application with a first account. The electronic device displays the conversation message interface of the target conversation in which the first user participates, where the conversation message interface includes the conversation messages sent by the first user.

In this embodiment, optionally, the first user belongs to the message sender, or the electronic device operated by the first user belongs to the message sender. The target conversation is a conversation in the instant messaging application running on the electronic device. The conversation message interface is a conversation message interface of the target conversation. The conversation message interface includes the conversation messages sent by the first user. To be specific, the first user can view the conversation messages sent by the first user in the conversation message interface, and certainly, can also view conversation messages sent to the first user by conversation members in other conversations or conversation messages sent by a conversation member in the target conversation in the conversation message interface.

Step 102: Update, in response to a first input by the first user on a target conversation message of the conversation messages, display of the target conversation message based on a target message recall mode.

In this embodiment, in a case that the electronic device receives the first input by the first user on the target conversation message of the conversation messages, the electronic device updates the display of the target conversation message based on the target message recall mode in response to the first input. When the display of the target conversation message is updated based on the target message recall mode, the target conversation message is processed. The target message recall mode includes a batch recall mode, a partial recall mode, or a partial user recall mode. To be specific, the target message recall mode may be any one of the batch recall mode, the partial recall mode, or the partial user recall mode. In different target message recall modes, the target conversation message is recalled in different manners. For example, in the batch recall mode, at least one target conversation message can be recalled at the same time; in the partial recall mode, partial content in a single target conversation message can be recalled; and in the partial user recall mode, the target conversation message can be recalled from a part of users. Therefore, conversation message recall manners are enriched, so that users have more choices in different scenarios, thereby improving conversation communication efficiency.

In this embodiment, optionally, the target message recall mode may be determined based on the first input by the first user, or may maintain the same as the message recall mode used last time the first user recalls the conversation message interface.

There may be one or more target conversation messages, and the quantity of the target conversation messages may be determined based on the first input.

Therefore, compared with a message recall manner in the related art in which only the entire information can be recalled, and only one piece of information can be recalled at a time, in this embodiment of this application, after the first input by the first user on the target conversation message is received, the display of the target conversation message is updated based on the target message recall mode, that is, functions such as recalling and resending the target conversation message are implemented. The target message recall mode includes a batch recall mode, a partial recall mode, or a partial user recall mode. Therefore, users can select different target message recall modes based on individual requirements, to meet different recall requirements of the users for the target conversation message, thereby simplifying a recall operation process, and improving the conversation communication efficiency.

Description is provided below with reference to specific embodiments.

In some embodiments of this application, the updating, in response to a first input by the first user on a target conversation message of the conversation messages, display of the target conversation message based on a target message recall mode includes:
displaying message recall mode options in response to the first input by the first user on the target conversation message of the conversation messages; and
updating, in response to a second input by the first user on a target message recall mode option of the message recall mode options, the display of the target conversation message based on a target message recall mode corresponding to the target message recall mode option.

In this embodiment, in a case that the electronic device receives the first input by the first user on the target conversation message of the conversation messages, for example, the first input may be a preset touch input, such as a tap input, a long press input, or a slide input, for the target conversation message in the conversation message interface, the electronic device displays the message recall mode options in response to the first input, where each message recall mode option corresponds to one message recall mode. If the second input by the user on the target message recall mode option of the message recall mode options is received, for example, the second input may be a tap input, a long press input, a drag input, or the like for the target message recall mode option, the electronic device determines a message recall mode corresponding to the target message recall mode option as the target message recall mode in response to the second input, and updates the display of the target conversation message based on the target message recall mode. Therefore, before recalling the conversation message, the user can freely select a required target message recall mode, so that the personalized requirements of the user for the conversation message recall mode in different scenarios are satisfied, thereby improving the conversation communication efficiency.

In some embodiments of this application, the displaying message recall mode options in response to the first input by the first user on the target conversation message of the conversation messages includes:
displaying a message recall mode option matching a message type of the target conversation message in response to the first input by the first user on the target conversation message of the conversation messages.

In other words, the electronic device displays the corresponding message recall mode option based on the message type of the target conversation message in response to the first input by the first user on the target conversation message of the conversation messages. Optionally, the message type of the target conversation message may be a picture message type, a text message type, or the like. For example, if the target conversation message is of the picture message type, when the message recall mode options are displayed, the picture as a whole cannot be partially recalled, and therefore the corresponding message recall mode options include a batch recall mode option and a partial user recall mode option. If the target conversation message is of the text message type, when the message recall mode options are displayed, the corresponding message recall mode options include a batch recall mode option, a partial recall mode option, a partial user recall mode option, and the like, thereby satisfying a requirement of the user to select different message recall modes for different message types.

It may be understood that a display name of the message recall mode option may be named based on a function or a specific execution manner of the corresponding message recall mode, and is not limited to the foregoing names in actual application.

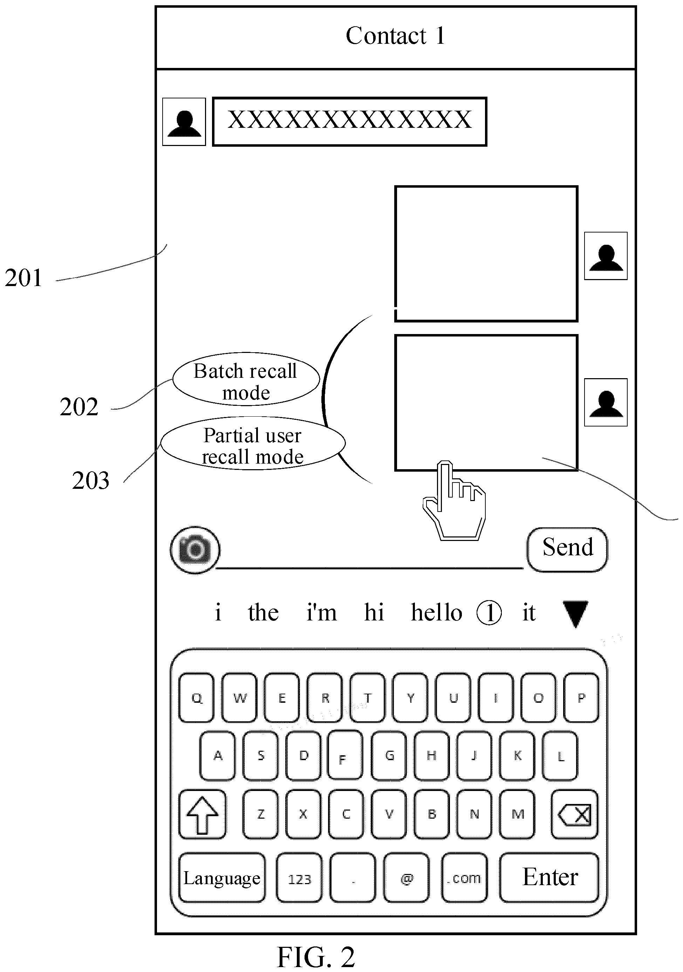

FIG. 2 is a schematic diagram 1 of message recall mode options according to an embodiment of this application. As shown in FIG. 2, after the first input by the user in a conversation message interface 201 is received, an arc-shaped curve is displayed in the conversation message interface 201, and message recall mode options supported by the target conversation message are arranged and displayed on the arc-shaped curve. For example, when the target conversation message is of the picture message type, displayed processing mode options include a first option 202 and a second option 203. The first option 202 corresponds to the "batch recall mode", and the second option 203 corresponds to the "partial user recall mode". The user can select any one of the options.

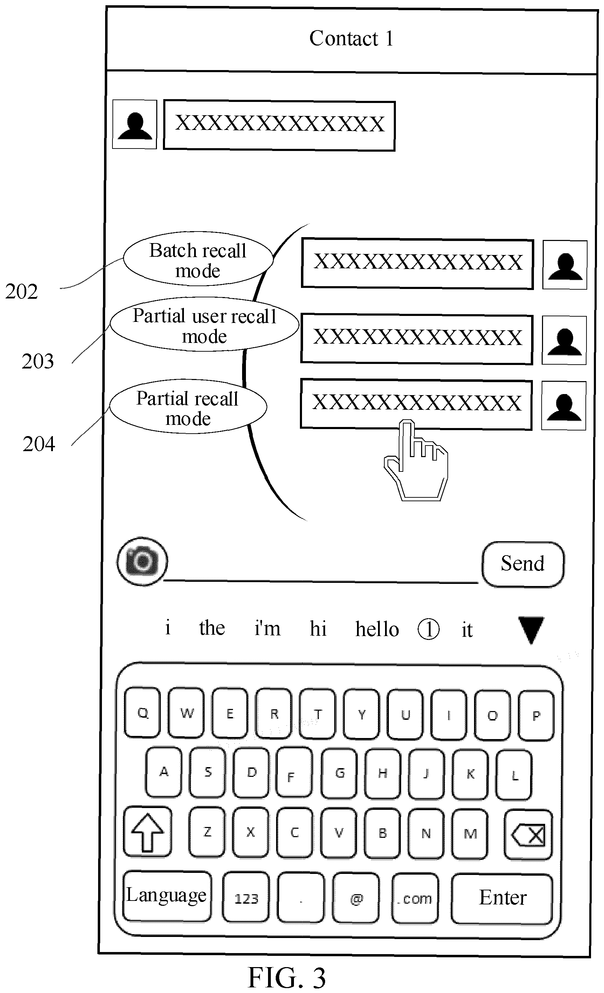

FIG. 3 is a schematic diagram 2 of message recall mode options according to an embodiment of this application. As shown in FIG. 3, after the first input by the user in a conversation message interface is received, an arc-shaped curve is displayed in the conversation message interface, and message recall mode options supported by the target conversation message are arranged and displayed on the arc-shaped curve. For example, when the target conversation message is of the text message type, displayed processing mode options include a first option 202, a second option 203, and a third option 204. The first option 202 corresponds to the "batch recall mode", the second option 203 corresponds to the "partial user recall mode", and the third option 204 corresponds to the "partial recall mode". The user can select any one of the options.

In some embodiments of this application, the target message recall mode includes a partial recall mode, and the partial recall mode includes a first partial recall mode and a second partial recall mode.

The updating, in response to a first input by the first user on a target conversation message of the conversation messages, display of the target conversation message based on a target message recall mode includes:
in a case that the target message recall mode is the first partial recall mode, updating the display of the target conversation message to at least two first message units in response to the first input by the first user on the target conversation message of the conversation messages; and
canceling, in response to a third input by the first user on a first target message unit of the at least two first message units, display of the first target message unit in the target conversation message.

In this embodiment, the target message recall mode includes a partial recall mode. For example, partial content in the target conversation message can be recalled in the partial recall mode. Optionally, the partial recall mode includes a first partial recall mode and a second partial recall mode.

If the target message recall mode selected by the first user is the first partial recall mode, the electronic device updates the display of the target conversation message to at least two first message units in response to the first input by the first user. The first message unit may be a word, a phrase, a sentence, or the like, for example, one word, one phrase, several words, or one punctuation. The electronic device may parse the target conversation message through syntax analysis, semantic analysis, or the like, or may split the target conversation message into at least two first message units based on the punctuation. Then, if the electronic device receives a third input by the first user on the first target message unit of the at least two first message units, the electronic device cancels the display of the first target message unit in the target conversation message in response to the third input, that is, the first target message unit in the target conversation message is recalled. In this way, a complex process in which the target conversation message is first recalled, then re-edited in an edit box, and resent after being edited is omitted, a recall operation is simplified, and the conversation communication efficiency is improved. In addition, the first target message unit to be recalled can be selected freely by the user, resulting in higher flexibility for recall.

Optionally, the at least two first message units obtained through parsing may be spaced apart. For example, adjacent first message units may be separated by using spaces, or may be separated by using identifiers such as vertical lines.

The selected first target message unit may be marked in bold, underlined, marked by changing font color, or the like, to facilitate user differentiation and viewing.

In some other embodiments of this application, the canceling, in response to a third input by the first user on a first target message unit of the at least two first message units, display of the first target message unit in the target conversation message includes:
in response to the third input by the first user on the first target message unit, updating the display of the first target message unit to preset message content; or canceling the display of the first target message unit, and updating a display positions of remaining message units in the target conversation message.

In some embodiments, when the displaying of the first target message unit in the target conversation message is canceled, the display of the first target message unit may be updated as the preset message content. For example, the preset message content is overlaydisplayed at an original display position of the first target message unit. The preset message content may be an identifier such as "Message content has been deleted" or "Message content is being re-edited", or may be a blank space. In some other embodiments, when the display of the first target message unit in the target conversation message is canceled, the display positions of the remaining message units in the target conversation message are updated. For example, the first target message unit may be deleted from the target conversation message, the remaining message units are reordered into a new conversation message, and then the new conversation message is displayed.

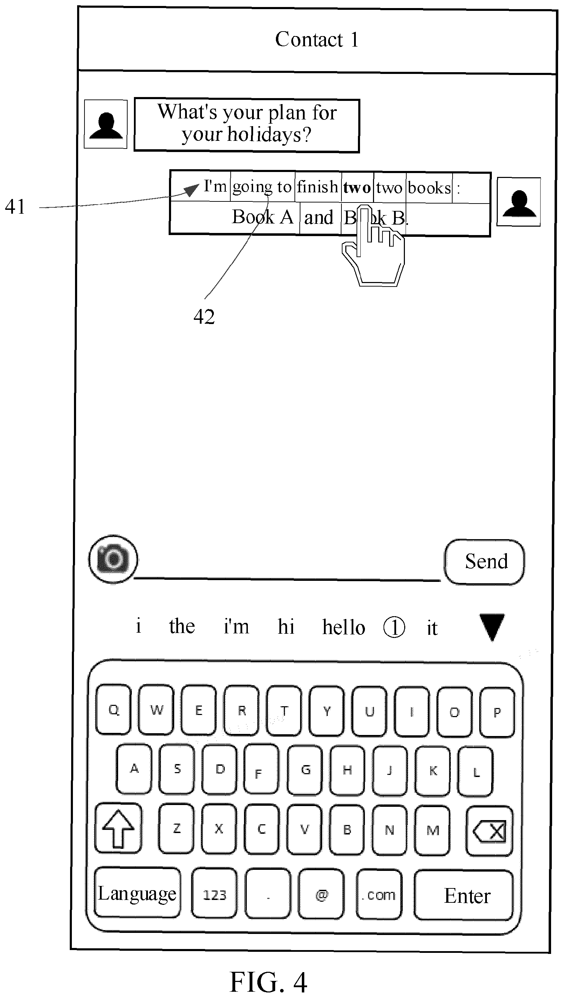

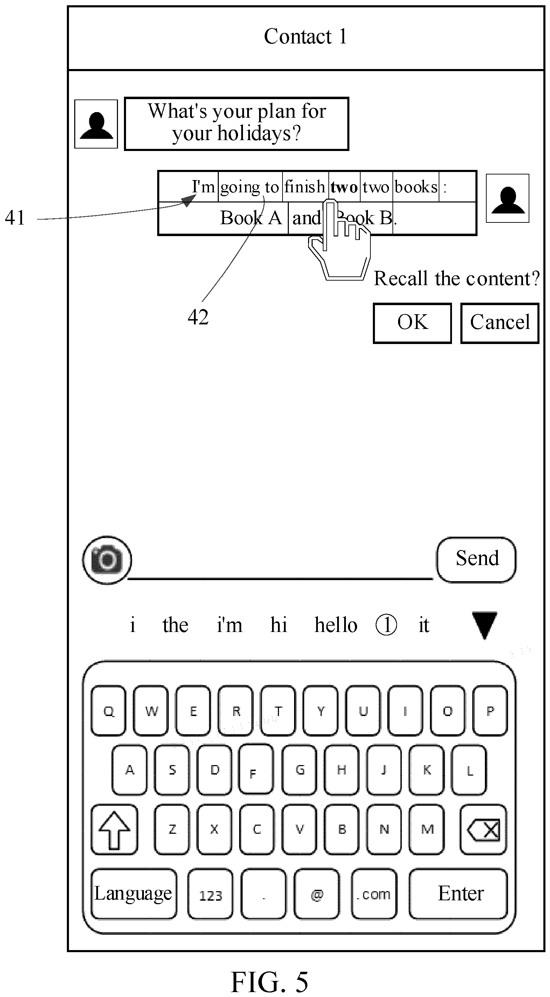

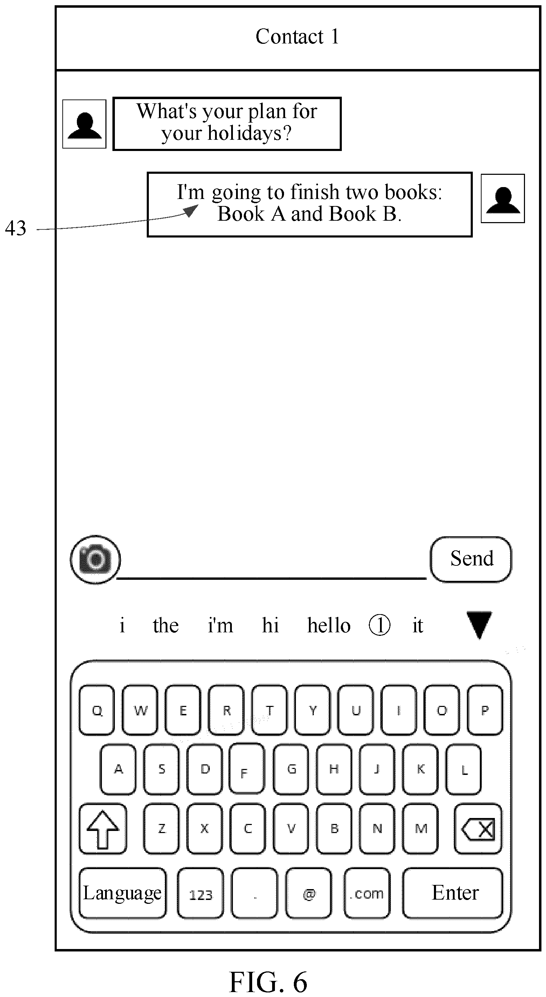

FIG. 4 is a schematic diagram of at least two first message units according to an embodiment of this application, FIG. 5 is a schematic diagram of display of a recall prompt according to an embodiment of this application, and FIG. 6 is a schematic diagram after a first target message unit is recalled according to an embodiment of this application. In FIG. 4, a target conversation message 41 in the conversation message interface is split into a plurality of first message units 42. The plurality of first message units 42 are divided by using vertical lines. The user selects the first target message unit in the conversation message interface, that is, the first target message unit is "two". In FIG. 5, the electronic device displays recall prompt information. The recall prompt information includes "Recall the content?", and two options: "OK" and "Cancel". By tapping on the "OK" option, the user can recall the first target message unit. In FIG. 6, the first target message unit is recalled. To be specific, the first target message unit in an originally displayed target conversation message is deleted, and remaining message content constitutes an updated conversation message 43.

In some embodiments of this application, the conversation message interface includes a conversation message display region and a conversation message input region.

The method further includes:
displaying message content of the first target message unit in the conversation message input region;
updating the message content of the first target message unit in response to a fourth input by the first user on the message content of the first target message unit displayed in the conversation message input region; and
updating the target conversation message displayed in the conversation message display region by using the updated message content of the first target message unit.

The conversation message display region is used for displaying sent or received conversation messages, and the conversation message input region is used for editing the conversation messages. When the first target message unit in the target conversation message is recalled, message content of the first target message unit may be displayed in the conversation message input region of the conversation message interface. That is, the first target message unit is recalled and displayed in the conversation message input region, to achieve a partial recall effect. Then, if the electronic device receives a fourth input by the first user on the message content of the first target message unit displayed in the conversation message input region, for example, the fourth input is an input of editing the message content of the first target message unit in the conversation message input region, the electronic device updates the message content of the first target message unit in the conversation message input region in response to the fourth input, and updates the target conversation message displayed in the conversation message display region by using the updated message content of the first target message unit. For example, the original first target message unit in the target conversation message displayed in the conversation message display region is replaced with the updated message content of the first target message unit, or the entire target conversation message displayed in the conversation message display region is replaced with the updated message content of the first target message unit.

Compared with the related art in which a message that is recalled and then sent after being re-edited is sent as a new message, in this embodiment of this application, the target conversation message displayed in the conversation message display region is updated by using the updated message content of the first target message unit. Therefore, the updated message content of the first target message unit is displayed at the position of the target conversation message in the conversation message display region before recall. For a sender and a receiver, the target conversation message is replaced with the updated message content of the first target message unit. Therefore, the display position of the updated message content of the first target message unit that is recalled and resent maintains consistent before and after the recall, so that context messages in the conversation message interface are not confusing and are logical, facilitating user reading and understanding.

In some other embodiments of this application, the conversation message interface includes a conversation message display region and a conversation message input region. The updating, in response to a first input by the first user on a target conversation message of the conversation messages, display of the target conversation message based on a target message recall mode includes:
in a case that the target message recall mode is the second partial recall mode, displaying message content of the target conversation message in the conversation message input region in response to the first input by the first user on the target conversation message displayed in the conversation message display region; and
updating, in response to a fifth input by the first user on target message content of the message content of the target conversation message, the target conversation message displayed in the conversation message display region by using the target message content.

The conversation message display region is used for displaying sent or received conversation messages, and the conversation message input region is used for editing the conversation messages. If the target message recall mode selected by the first user is the second partial recall mode, in a case that the electronic device receives the first input by the first user on the target conversation message displayed in the conversation message display region, the electronic device displays the message content of the target conversation message in the conversation message input region in response to the first input. In this case, the entire target conversation message is recalled to the conversation message input region. Then, if the electronic device receives a fifth input by the first user on the target message content of the message content of the target conversation message displayed in the conversation message input region, for example, the fifth input is an input of selecting the target message content of the message content of the target conversation message in the conversation message input region, the electronic device updates the target conversation message displayed in the conversation message display region by using the target message content in response to the fifth input. For example, the target conversation message displayed in the conversation message display region is replaced with the target message content, implementing a function of sending partial content of the recalled conversation message after the entire conversation message is recalled.

Compared with the related art in which a message that is recalled and then sent after being re-edited is sent as a new message, in this embodiment of this application, the target conversation message displayed in the conversation message display region is updated by using the target message content. Therefore, the target message content is displayed at the position of the target conversation message in the conversation message display region before the recall. For a sender and a receiver, the target conversation message is replaced with the target message content. Therefore, the display position of the resent target message content maintains consistent before and after the recall, so that context messages in the conversation message interface are not confusing and are logical, facilitating user reading and understanding.

In some embodiments of this application, the displaying message content of the target conversation message in the conversation message input region includes:
updating the display of the message content of the target conversation message displayed in the conversation message input region to at least two second message units; and
the updating, in response to a fifth input by the first user on target message content of the message content of the target conversation message, the target conversation message displayed in the conversation message display region by using the target message content includes:
updating, in response to a fifth input by the first user on a second target message unit of the at least two second message units, the target conversation message displayed in the conversation message display region by using the second target message unit.

In this embodiment, when the entire target conversation message is recalled and displayed in the conversation message input region, the message content of the target conversation message may be updated and displayed as at least two second message units. The second message unit may be a word, a phrase, a sentence, or the like, for example, one word, one phrase, several words, or one punctuation. The electronic device may parse the target conversation message through syntax analysis, semantic analysis, or the like, or may split the target conversation message into at least two second message units based on the punctuation. Then, if the electronic device receives a fifth input by the first user on the second target message unit of the at least two second message units, for example, the fifth input is an input of selecting the second target message unit in the conversation message input region, the electronic device updates the target conversation message displayed in the conversation message display region by using the second target message unit in response to the fifth input. For example, the target conversation message displayed in the conversation message display region is replaced with the second target message unit, implementing a function of sending partial content of the recalled conversation message after the entire conversation message is recalled. In addition, the electronic device may automatically parse and split the target conversation message, saving a process of manual editing by the user, and improving the conversation communication efficiency.

In some embodiments, optionally, after the target conversation message in the conversation message input region is split into the at least two second message units, due to limitations of processing such as syntax parsing and semantic parsing, it is possible that the at least two second message units obtained through splitting are not a split result expected by the first user. In this case, the first user may re-split and select the at least two second message units by an input on the target conversation message. For example, if the electronic device receives an input by the first user on the target conversation message, for example, the input is an input of long-pressing one second message unit in the target conversation message and moving the second message unit left or right, the electronic device updates display of the at least two original second message units to at least two third message units in response to the input. Message lengths of the third message unit and the second message unit are different, that is, re-division of message content is implemented. Then, the first user may select any third message unit to update the target conversation message displayed in the conversation message display region.

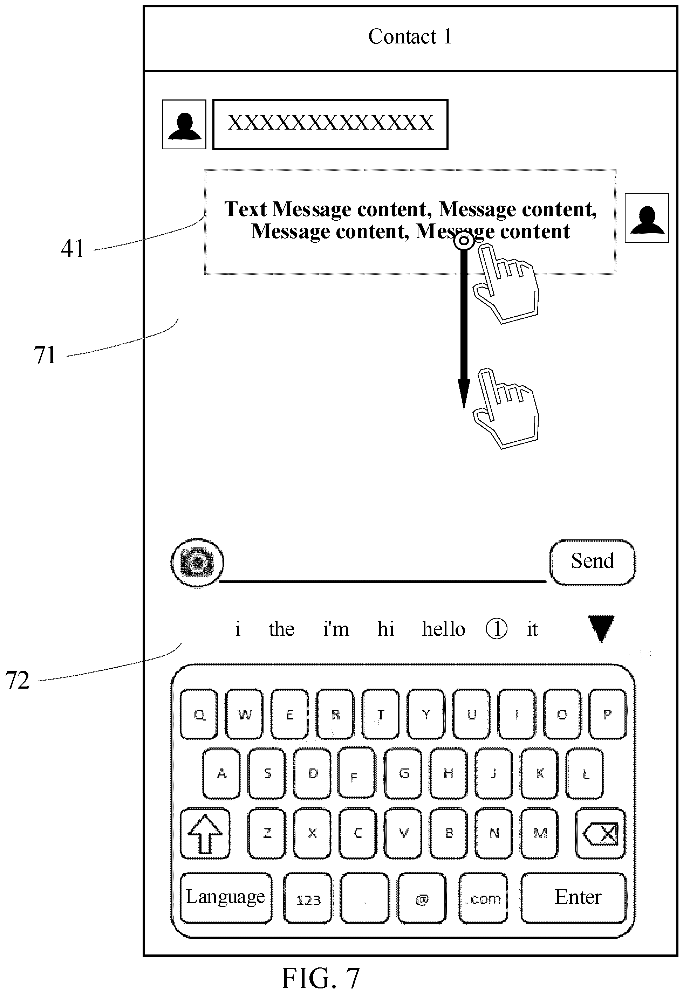

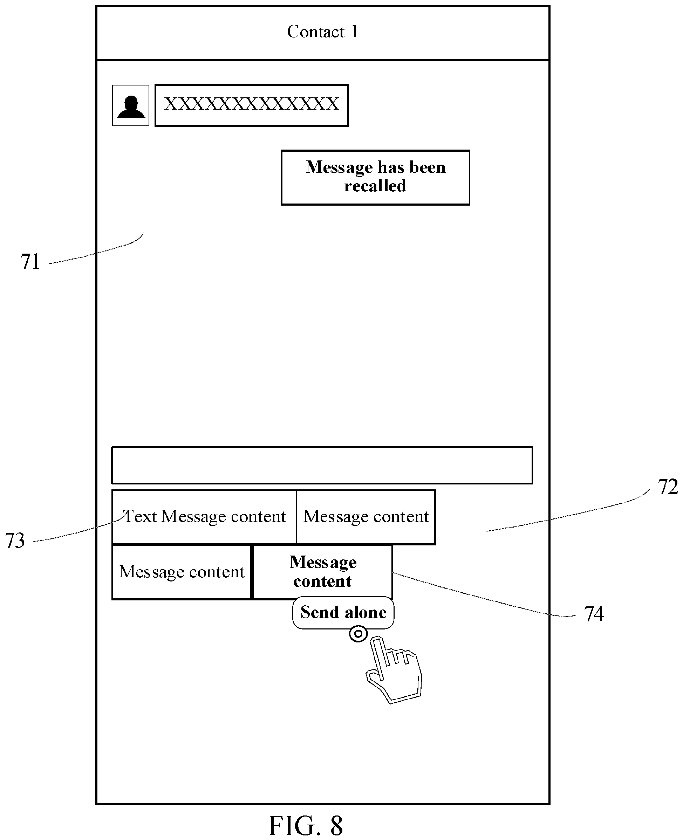

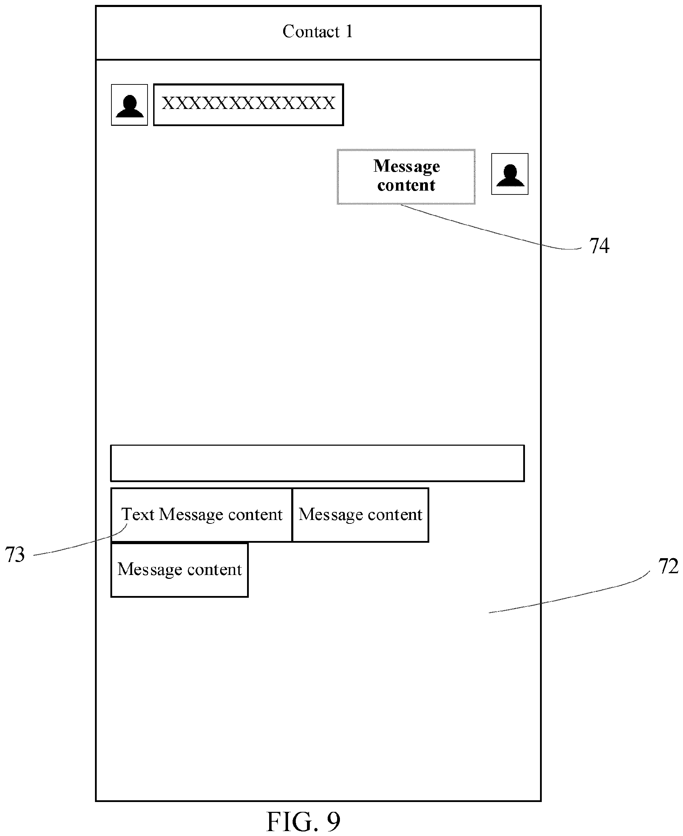

FIG. 7 is a schematic diagram of a first input according to an embodiment of this application, FIG. 8 is a schematic diagram of at least two second message units according to an embodiment of this application, and FIG. 9 is a schematic diagram of resent target message content according to an embodiment of this application. In FIG. 7, the conversation message interface includes a conversation message display region 71 and a conversation message input region 72. The first input may include an input of long-pressing the target conversation message 41 in the conversation message interface and dragging the target conversation message 41 to the conversation message input region 72. The electronic device recalls the target conversation message 41 in response to the input. In FIG. 8, the recalled target conversation message 41 is displayed in the conversation message input region 72, and is updated and displayed as a plurality of second message units. In FIG. 9, the user may send a second target message unit 74 by tapping on a sending button. The resent second target message unit 74 is updated and displayed at the original display position of the corresponding target conversation message 41. The second target message unit 74 is partial content of the recalled target conversation message 41.

In some other embodiments of this application, after the updating the display of the target conversation message to at least two first message units in response to the first input by the first user on the target conversation message of the conversation messages, the method further includes:
updating the display of the at least two first message units to at least two third message units in response to a sixth input by the first user on the target conversation message; and
canceling, in response to a seventh input by the first user on a third target message unit of the at least two third message units, display of the third target message unit in the target conversation message, where
message lengths of the third message unit and the first message unit are different.

In other words, in this embodiment, after the target conversation message is split into the at least two first message units, due to limitations of processing such as syntax parsing and semantic parsing, it is possible that the at least two first message units obtained through splitting are not a split result expected by the first user. In this case, the first user may re-split and select the at least two first message units through the sixth input. For example, if the electronic device receives a sixth input by the first user on the target conversation message, for example, the sixth input is an input of long-pressing one first message unit in the target conversation message and moving the first message unit left or right, the electronic device updates display of the at least two original first message units to at least two third message units in response to the sixth input. Message lengths of the third message unit and the first message unit are different, that is, re-division of message content is implemented. Then, if the electronic device receives a seventh input by the first user on the third target message unit of the at least two third message units that are re-divided, the electronic device cancels the display of the third target message unit in the target conversation message in response to the seventh input, thereby recalling partial message content in the target conversation message. In addition, this recall manner allows the at least two first message units to be further re-split and combined based on the electronic device automatically splitting the target conversation message into the at least two first message units. User operations are simplified to some extent, and the user is allowed to freely re-split and combine the at least two first message units to obtain message content that the user intends to select, ensuring flexibility to some extent.

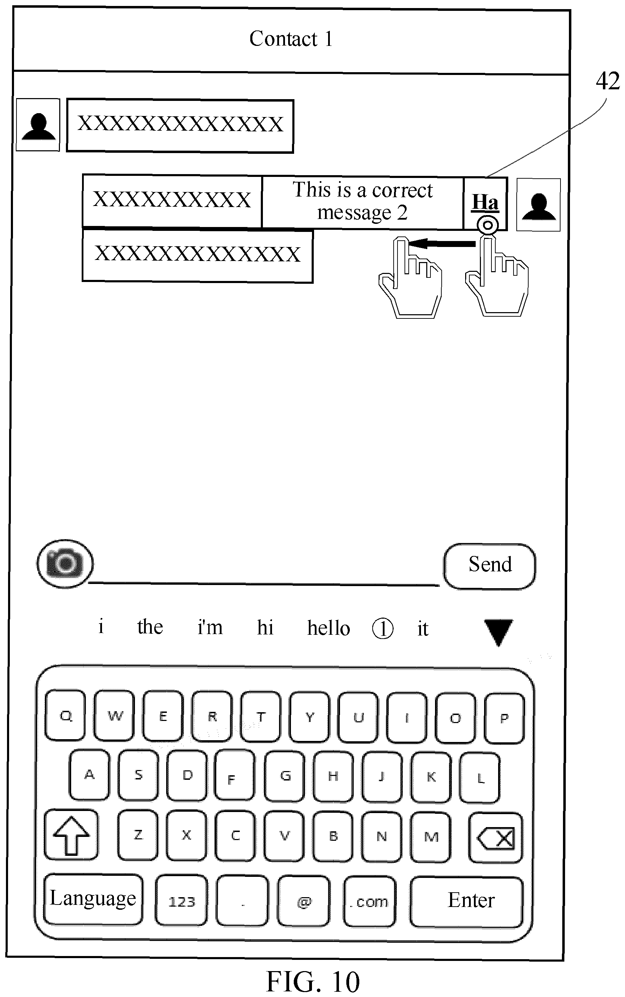

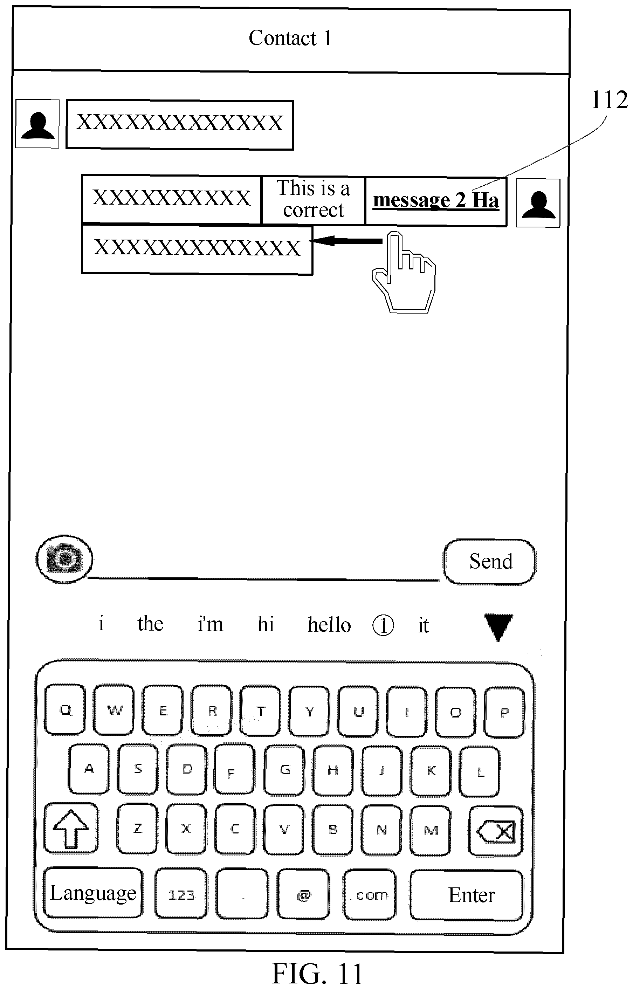

FIG. 10 is a schematic diagram of a sixth input according to an embodiment of this application, and FIG. 11 is a schematic diagram of a third message unit according to an embodiment of this application. As shown in FIG. 10 and FIG. 11, the sixth input may be an input of long-pressing the first message unit 42 in the target conversation message in the conversation message interface and then sliding the first message unit 42 left or right. In this case, the electronic device updates the display of the at least two first message units 42 to at least two third message units 112 in response to the sixth input. By setting such a selection input, it can be convenient for the user to select the third message unit 112 with any word count.

In some embodiments of this application, the target message recall mode includes a partial user recall mode, and the partial user recall mode includes a first partial user recall mode. The target conversation is a group conversation in an instant messaging application.

The method further includes:
in a case that the target message recall mode is the first partial user recall mode, displaying conversation member identifiers of conversation members participating in the group conversation in response to the first input by the first user on the target conversation message of the conversation messages; and
sending, in response to an eighth input by the first user on a target conversation member identifier of the conversation member identifiers, first recall indication information to a target instant messaging application logged in with the target conversation member identifier, where the first recall indication information is used for instructing an electronic device running the target instant messaging application to cancel the display of the target conversation message.

In this embodiment, in the partial user recall mode, the target conversation message sent by the first user may be recalled from a part of users. The partial user recall mode includes the first partial user recall mode. The target conversation is the group conversation in the instant messaging application. If the target message recall mode selected by the user is the first partial user recall mode, in a case that the electronic device receives the first input by the user on the target conversation message of the conversation messages, the electronic device displays conversation member identifiers of conversation members participating in the group conversation in response to the first input, for example, the conversation member identifiers are user names of the conversation members. Then, if the electronic device receives an eighth input by the user on the target conversation member identifier of the conversation member identifiers, for example, the eighth input is an input of tapping on the target conversation member identifier, the electronic device sends first recall indication information to a target instant messaging application logged in with the target conversation member identifier, in response to the eighth input. The first recall indication information is used for instructing the electronic device running the target instant messaging application to cancel the display of the target conversation message. In other words, after receiving the first recall indication information, the electronic device running the target instant messaging application cancels the display of the target conversation message. In this way, the target conversation message on the electronic device of a part of users is recalled. In other words, the user corresponding to the electronic device running the target instant messaging application cannot view the target conversation message.

Therefore, in some recall scenarios, for example, for sensitive information that may be confidential, not all users have reading/viewing permission. In this case, the first user does not need to recall the target conversation message from all other users, but only select target conversation members, to authorize a part of conversation members to view, and recall the viewing permission of a part of conversation members. In addition, the conversation members whose viewing permission is recalled can be freely selected by the first user, which greatly facilitates the recall process and results in higher flexibility.

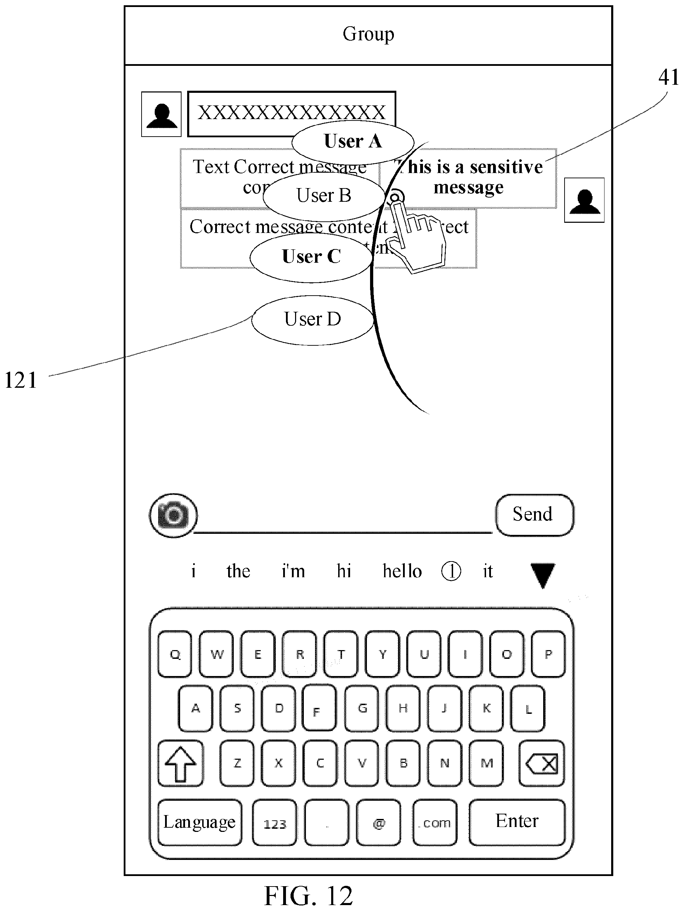

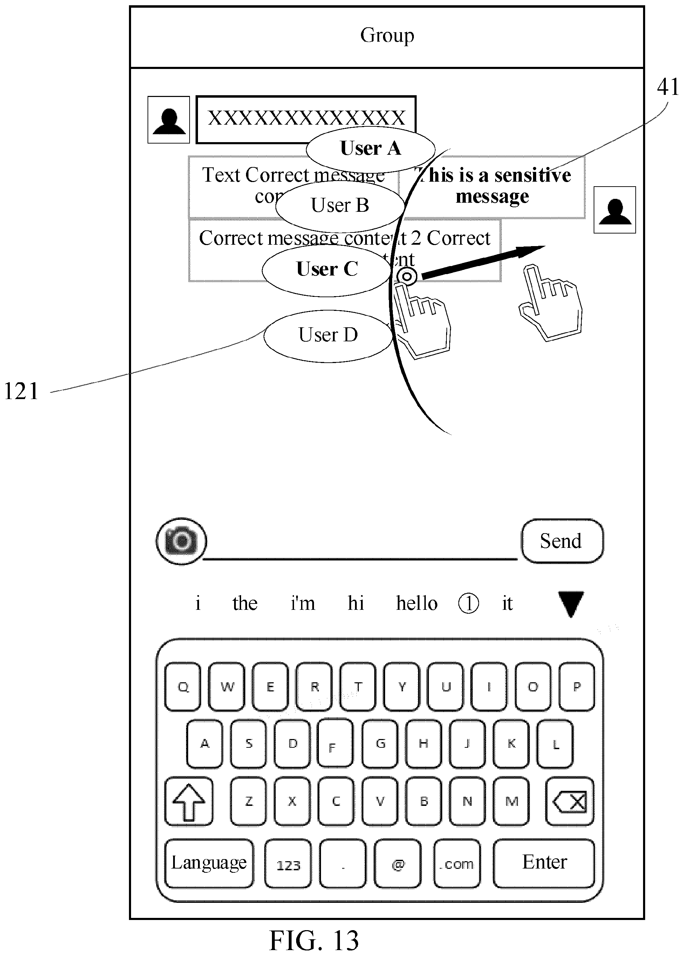

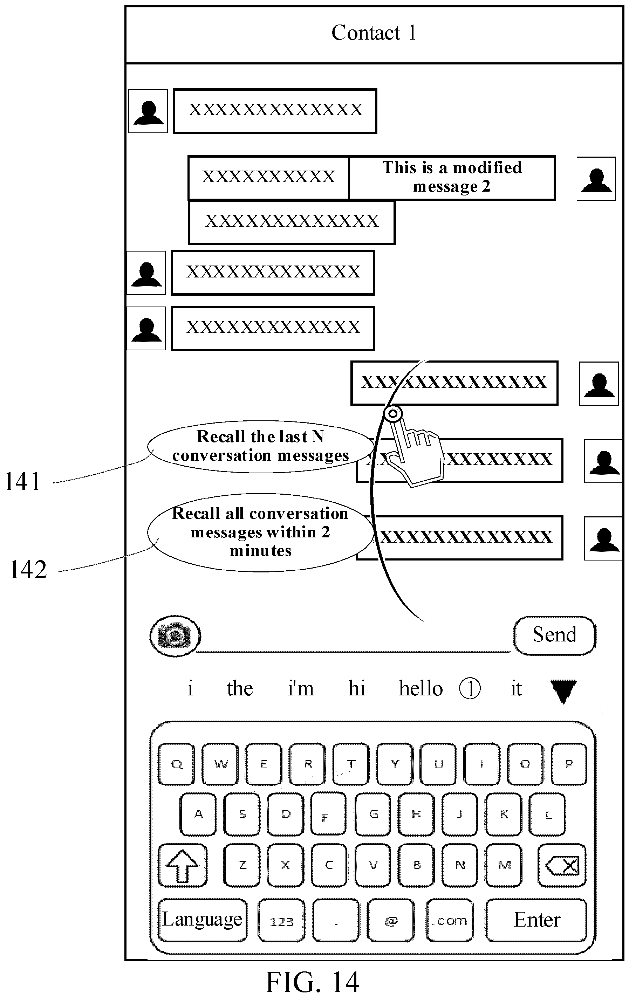

FIG. 12 is a schematic diagram of conversation member identifiers according to an embodiment of this application, and FIG. 13 is a schematic diagram of an eighth input according to an embodiment of this application. In FIG. 12, the first input may include an input of long-pressing the target conversation message 41 in the conversation message interface. Therefore, the electronic device displays conversation member identifiers 121 of the conversation members participating in the group conversation in response to the first input. Optionally, the conversation member identifiers 121 may be displayed at intervals on a pop-up arc line in the conversation message interface. In FIG. 14, the user triggers the recall for the conversation member through an input of dragging the target conversation member identifier to a target region. After the recall, the corresponding conversation member cannot view the target conversation message 41.

In some other embodiments of this application, the target message recall mode includes a partial user recall mode, and the partial user recall mode includes a second partial user recall mode. The target conversation is a group conversation in an instant messaging application.

The method further includes:
in a case that the target message recall mode is the second partial user recall mode, updating the display of the target conversation message to at least two fourth message units in response to the first input by the first user on the target conversation message of the conversation messages; and
sending, in response to a ninth input by the first user on a fourth target message unit of the at least two fourth message units and a tenth input on a target conversation member identifier corresponding to a target conversation member of conversation members participating in the group conversation, second recall indication information to a target instant messaging application logged in with the target conversation member identifier, where the second recall indication information is used for instructing an electronic device running the target instant messaging application to cancel display of the fourth target message unit.

In this embodiment, in the partial user recall mode, partial content in the target conversation message sent by the first user may be recalled from a part of users. The partial user recall mode includes a second partial user recall mode. The target conversation is the group conversation in the instant messaging application, namely, a group conversation. If the target message recall mode selected by the user is the second partial user recall mode, in a case that the electronic device receives the first input by the user on the target conversation message of the conversation messages, the electronic device updates the display of the target conversation message to at least two fourth message units in response to the first input. The fourth message unit may be a word, a phrase, a sentence, or the like, for example, one word, one phrase, several words, or one punctuation. The electronic device may parse the target conversation message through syntax analysis, semantic analysis, or the like, or may split the target conversation message into at least two fourth message units based on the punctuation. Then, if the electronic device further receives a ninth input by the first user on the fourth target message unit, for example, the ninth input is an input of tapping on the fourth target message unit, and a tenth input on the target conversation member identifier corresponding to the target conversation member of the conversation members participating in the group conversation, for example, the tenth input is an input of tapping on the target conversation member identifier corresponding to the target conversation member, where all the conversation members participating in the group conversation have corresponding conversation member identifiers, and the conversation member identifiers may be user names of the conversation members, the electronic device sends second recall indication information to a target instant messaging application logged in with the target conversation member identifier in response to the ninth input and the tenth input, where the second recall indication information is used for instructing an electronic device running the target instant messaging application to cancel the display of the fourth target message unit. In other words, after receiving the second recall indication information, the electronic device running the target instant messaging application cancels the display of the fourth target message unit, thereby recalling part of the message content in the target conversation message on the electronic device of a part of users. That is, the user corresponding to the electronic device running the target instant messaging application cannot view the recalled part of the message content in the target conversation message.

Therefore, in some recall scenarios, for example, for sensitive information that may be confidential, not all users have permission to read/view all message content. In this case, the first user does not need to completely recall the target conversation message, but only select the message content that needs to be recalled and an object (that is, the target conversation member) on which the recall needs to be performed, to authorize a part of conversation members to view part of message content, and recall permission of the part of the conversation members to view the other part of message content. In addition, the conversation members whose permission to view the other part of message content is recalled may be freely selected by the first user, and the recalled part of content may also be freely selected by the first user, which greatly facilitates the recall process and results in higher flexibility.

In some embodiments of this application, the target conversation message includes at least two conversation messages.

The updating, in response to a first input by the first user on a target conversation message of the conversation messages, display of the target conversation message based on a target message recall mode includes:
in a case that the target message recall mode is a batch recall mode, canceling display of the at least two conversation messages in the conversation message interface in response to a first input by the first user on the at least two conversation messages.

In other words, in the batch recall mode, the first user may recall a plurality of conversation messages in batch at the same time. The plurality of conversation messages may be voice messages, picture messages, text messages, or the like. Specifically, if the electronic device receives a first input by the first user on at least two conversation messages (that is, the target messages) of the conversation messages, the electronic device cancels display of the at least two conversation messages in the conversation message interface in response to the first input, that is, the plurality of conversation messages are recalled at the same time.

In some embodiments, the first input may be an input of sliding by a preset distance in the conversation message interface, or an input of entering the quantity of conversation messages that need to be recalled into the conversation message interface, or an input of entering a time period corresponding to conversation messages that need to be recalled into the conversation message interface. In this case, the conversation messages of the corresponding quantity or within the target time period are selected. In other words, the target quantity of the conversation messages that need to be recalled or the conversation messages within which time period to recall may be determined based on the first input. For example, when the first input is the input of sliding in the conversation message interface, a length of the sliding distance is positively correlated to the target quantity of the conversation messages that need to be recalled. That is, a longer length indicates a larger target quantity, and a shorter length indicates a smaller target quantity. The target quantity may be counted from the latest sent message being 1. Alternatively, the length of the sliding distance is positively correlated to a length of the target time period corresponding to the conversation messages that need to be recalled. That is, a longer length indicates a longer target time period, and a shorter length indicates a shorter target time period. A start time of the target time period may be counted from a moment corresponding to the latest sent message. For another example, when the first input is an input of entering a number in the conversation message interface, the entered number is a quantity of conversation messages that need to be recalled. For example, entering N indicates recalling N conversation messages. For still another example, when the first input is an input of entering a time period in the conversation message interface, the entered time period is the target time period. For example, entering two minutes indicates recalling all conversation messages within two minutes before the moment corresponding to the latest sent message.

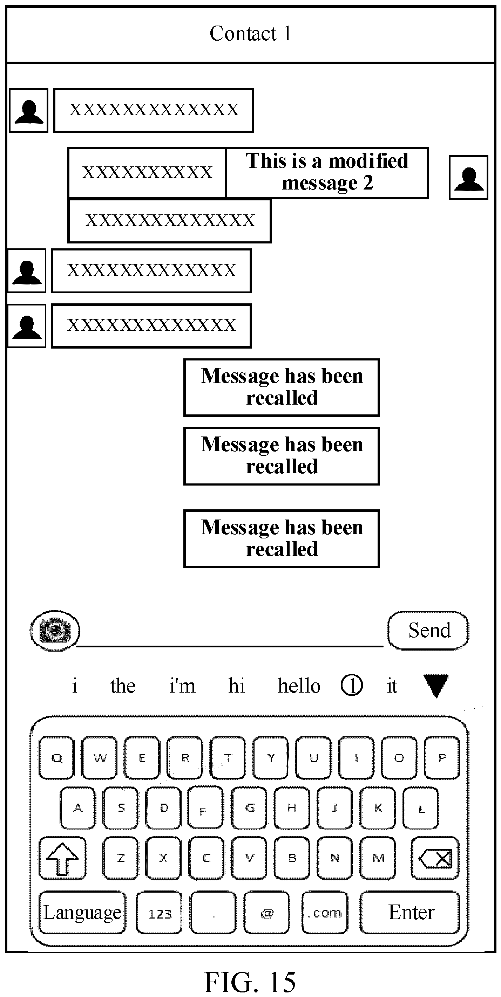

FIG. 14 is a schematic diagram of a target quantity and a target time period according to an embodiment of this application, and FIG. 15 is a schematic diagram after at least two conversation messages are recalled according to an embodiment of this application. In FIG. 14, the first input may include an input of sliding in the conversation message interface. The electronic device displays a first recall option 141 and a second recall option 142 in response to the input. The user may choose to recall the conversation messages of the target quantity or the conversation messages within the target time period through the first recall option 141 and the second recall option 142. In FIG. 15, a plurality of conversation messages are recalled in batch at the same time.

Therefore, in this embodiment of this application, a complex operation of recalling messages one by one is avoided, greatly improving efficiency of recalling messages, and a quantity of recalled messages can be selected freely by the user, greatly facilitating the recall process and resulting in higher flexibility.

In some other embodiments of this application, the conversation message interface includes a conversation message display region and a conversation message input region.

The method further includes:
displaying message content of the at least two conversation messages in the conversation message input region based on a display order of the at least two conversation messages in the conversation message display region;
updating message content of at least two target conversation messages in response to an eleventh input by the first user on the message content of the at least two conversation messages displayed in the conversation message input region; and
updating the target conversation message displayed in the conversation message display region by using the updated message content of the at least two target conversation messages.

The conversation message display region is used for displaying sent or received conversation messages, and the conversation message input region is used for editing the conversation messages. After at least two conversation messages are recalled in batch, content of the at least two recalled conversation messages may be displayed in the conversation message input region based on an original display order of the at least two recalled conversation messages in the conversation message display region. Then, if an eleventh input by the user on message content of the at least two conversation messages in the conversation message input region is received, for example, the eleventh input is an input of editing the message content or an input of adjusting an order of the at least two conversation messages, the electronic device updates the message content in the conversation message input region in response to the eleventh input. Then, the target conversation messages displayed in the conversation message display region are updated by using the updated message content of the at least two target conversation messages, that is, the function of batch resending after batch recall is implemented.

In this way, the user can directly edit, in the conversation message input region, the message content of the conversation message that needs to be sent after being re-edited, thereby avoiding a situation in which the user needs to copy the conversation message before recalling the conversation message (because the conversation message cannot be copied after being recalled), and avoiding a situation in which each time a conversation message is recalled, the conversation message covers original information in the conversation message input region in the related art, so that recall efficiency and sending efficiency of the conversation message are improved.

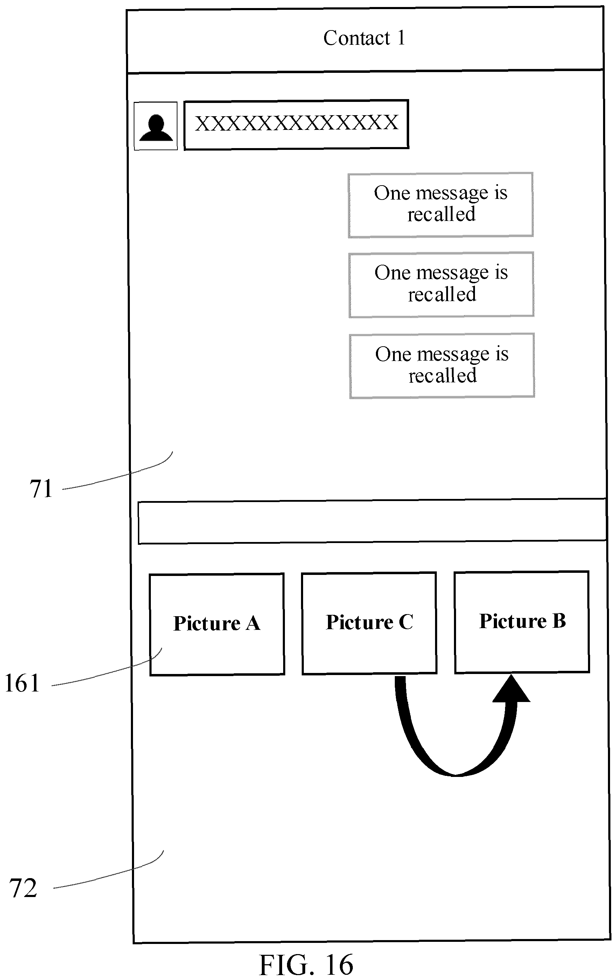

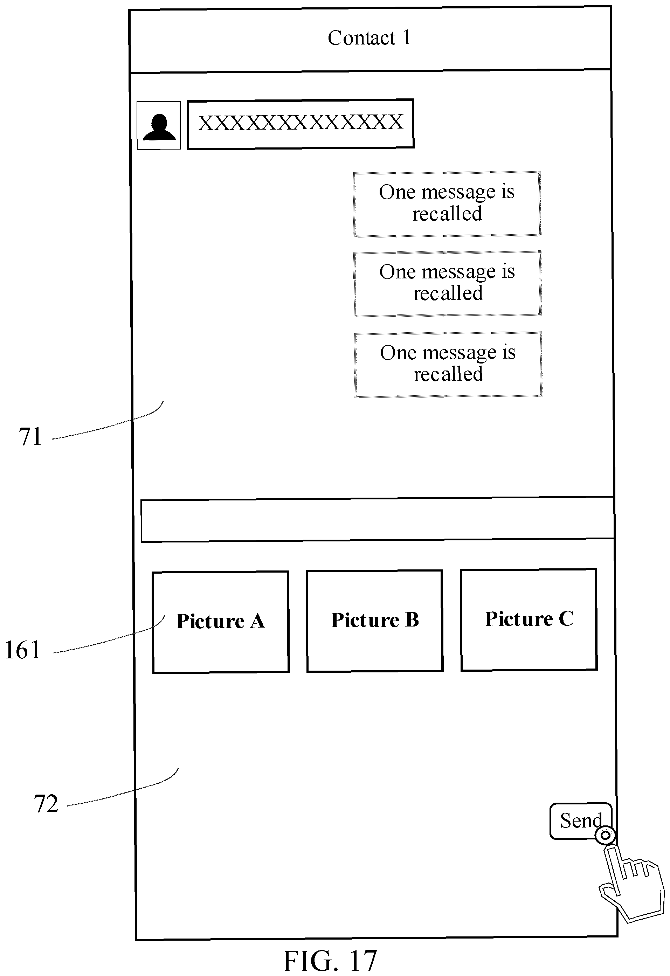

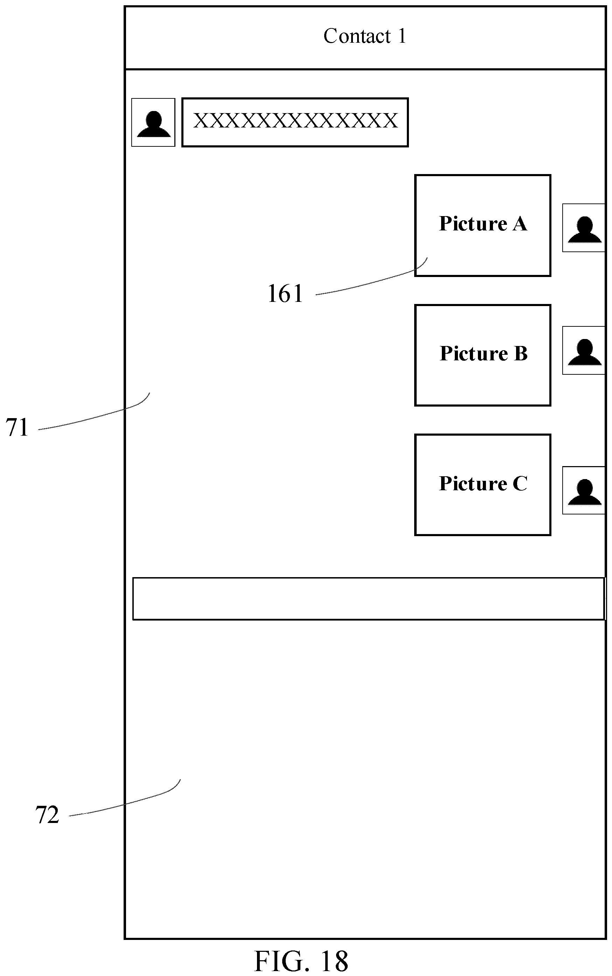

FIG. 16 is a schematic diagram of displaying a plurality of recalled conversation messages in a conversation message input region according to an embodiment of this application, FIG. 17 is a schematic diagram of a plurality of conversation messages which an adjusted order, and FIG. 18 is a schematic diagram of resending a plurality of conversation messages. As shown in FIG. 16, a conversation message interface 210 includes a conversation message display region 71 and a conversation message input region 72. A plurality of recalled conversation messages 161 are displayed in the conversation message input region 72. The user may update at least two conversation messages 161 through an eleventh input. For example, the user may move a position of any conversation message 161 to adjust an order of the plurality of conversation messages 161. As shown in FIG. 17, after the order is adjusted, the plurality of conversation messages 161 can be triggered to send. As shown in FIG. 18, the plurality of conversation messages 161 are sent in sequence based on the adjusted order.

In some other embodiments of this application, after the updating, in response to a first input by the first user on a target conversation message of the conversation messages, display of the target conversation message based on a target message recall mode, the method further includes:
displaying message update reminder information in the conversation message interface, where the message update reminder information is used for a second user participating in the target conversation to initiate a target conversation message viewing request, and the target conversation message viewing request is used for requesting to view the target conversation message before the update.

In other words, after the display of the target conversation message is updated based on the target message recall mode, the message update reminder information may be displayed in the conversation message interface, to remind other users to learn which conversation messages are updated. In addition, the second user participating in the target conversation may initiate the target conversation message viewing request through the message update reminder information. The target conversation message viewing request may be sent to the first user to request to view the target conversation message before update. In this way, in a case that the second user is interested in the target conversation message before the update, the second user may apply for permission to view the target conversation message by sending a viewing request to the first user.

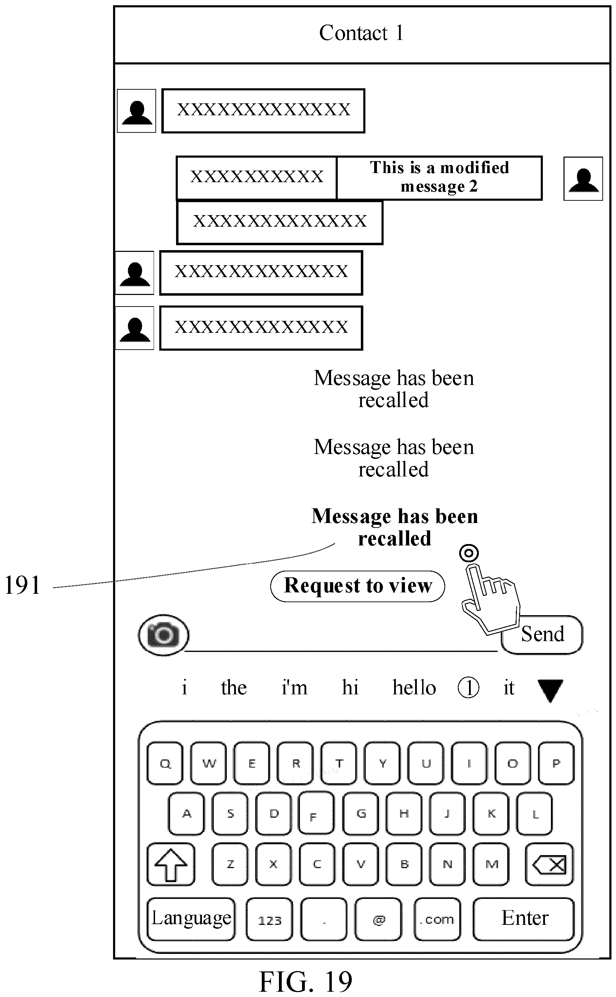

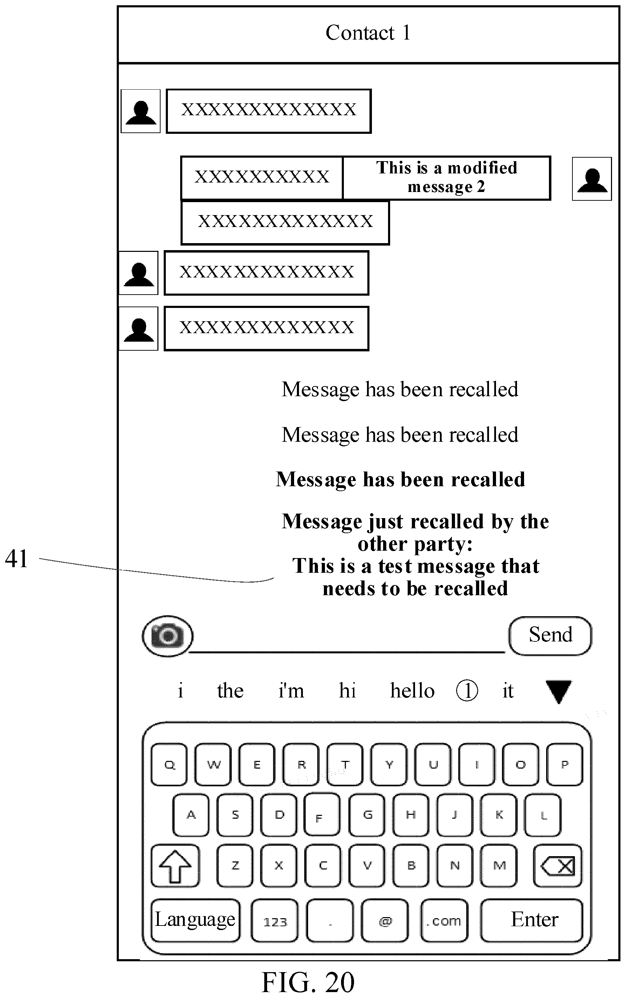

FIG. 19 is a schematic diagram 1 of message update reminder information according to an embodiment of this application, and FIG. 20 is a schematic diagram of a target conversation message before update according to an embodiment of this application. As shown in FIG. 19, after the viewing permission for the target conversation message is recalled, the message update reminder information 191 may be displayed in the conversation message interface. For example, the message update reminder information 191 is specifically "Message has been recalled" or "Viewing permission has been recalled" or "Sensitive message has been recalled". As shown in FIG. 20, the second user may trigger to send the target conversation message viewing request by an input on the message update reminder information 191. If a sender of the target conversation message 41 agrees to the target conversation message viewing request, the target conversation message 41 may be displayed in the conversation message interface for the second user to view.

In some other embodiments of this application, the method further includes:
locating a display position of the updated target conversation message in the conversation message interface in response to a twelfth input by the first user on the message update reminder information.

In this embodiment, after the message update reminder information is displayed in the conversation message interface, if the electronic device receives a twelfth input by the first user on the message update reminder information, for example, the twelfth input is an input of tapping on the message update reminder information, the electronic device jumps to locate the display position of the updated target conversation message in the conversation message interface in response to the twelfth input. In this way, the first user can quickly view the updated target conversation message by one tap, improving viewing efficiency, and saving a complex step of scrolling through a large number of conversation messages.

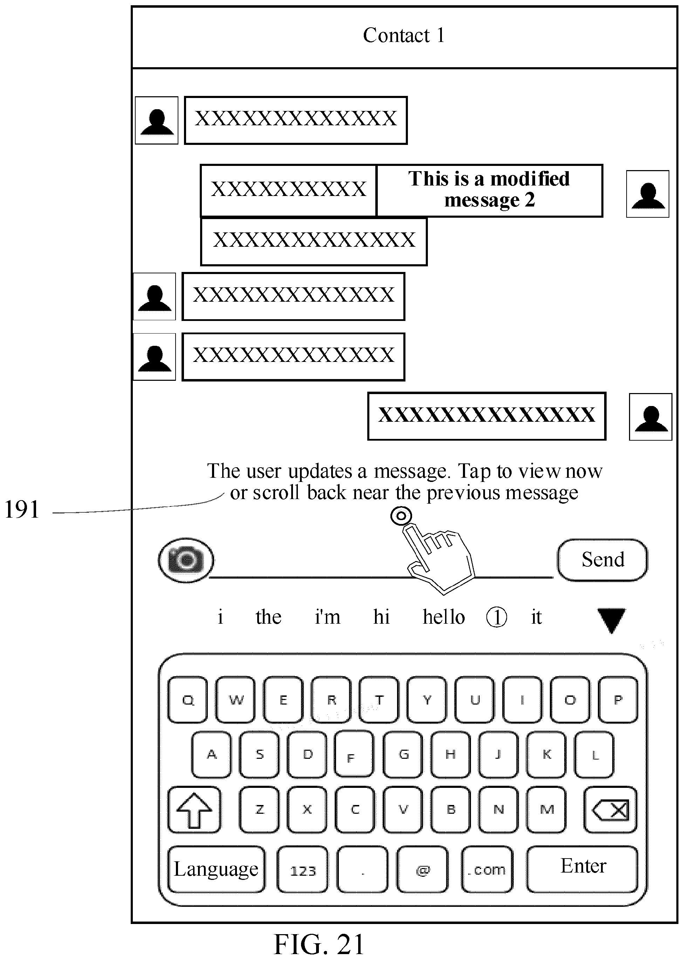

FIG. 21 is a schematic diagram 2 of message update reminder information according to an embodiment of this application. As shown in FIG. 21, after the target conversation message is updated and displayed, the message update reminder information 191 may be displayed in the conversation message interface. For example, the message update reminder information 191 is specifically "The user updates a message. Tap to view now or scroll back near the previous message" or "The user recalls partial content of the message". The user may cause the electronic device to quickly jump to the display position of the target conversation message through the twelfth input on the message update reminder information 191.

In conclusion, in the embodiments of this application, after the first input by the first user on the target conversation message is received, the display of the target conversation message is updated based on the target message recall mode, that is, functions such as recalling and resending the target conversation message are implemented. The target message recall mode includes a batch recall mode, a partial recall mode, or a partial user recall mode. Therefore, users can select different target message recall modes based on individual requirements, to meet different recall requirements of the users for the target conversation message, thereby simplifying a recall operation process, and improving the conversation communication efficiency.

The message processing method provided in the embodiments of this application may be performed by a message processing apparatus. In this embodiment of this application, an example in which the message processing apparatus performs the message processing method is used for describing the message processing apparatus provided in the embodiments of this application.

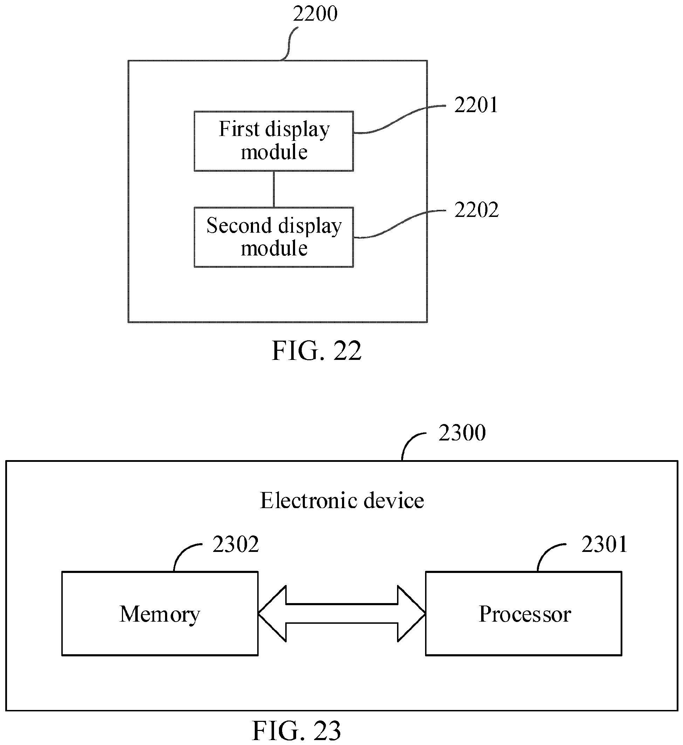

FIG. 22 is a schematic structural diagram of a message processing apparatus according to an embodiment of this application. As shown in FIG. 22, according to another aspect, an embodiment of this application further provides a message processing apparatus, applied to a message sender. The apparatus 2200 includes:
a first display module 2201, configured to display a conversation message interface of a target conversation in which a first user participates, where the conversation message interface includes conversation messages sent by the first user; and
a second display module 2202, configured to update, in response to a first input by the first user on a target conversation message of the conversation messages, display of the target conversation message based on a target message recall mode, where
the target message recall mode includes: a batch recall mode, a partial recall mode, or a partial user recall mode.

Optionally, the second display module includes:
a first display unit, configured to display message recall mode options in response to the first input by the first user on the target conversation message of the conversation messages; and
a second display unit, configured to update, in response to a second input by the first user on a target message recall mode option of the message recall mode options, the display of the target conversation message based on a target message recall mode corresponding to the target message recall mode option.

Optionally, the first display unit includes:
a first display subunit, configured to display a message recall mode option matching a message type of the target conversation message in response to the first input by the first user on the target conversation message of the conversation messages.

Optionally, the target message recall mode includes a partial recall mode, and the partial recall mode includes a first partial recall mode and a second partial recall mode; and
the second display module includes:
a third display unit, configured to: in a case that the target message recall mode is the first partial recall mode, update the display of the target conversation message to at least two first message units in response to the first input by the first user on the target conversation message of the conversation messages; and
a fourth display unit, configured to cancel, in response to a third input by the first user on a first target message unit of the at least two first message units, display of the first target message unit in the target conversation message.

Optionally, the fourth display unit includes:
a second display subunit, configured to: in response to the third input by the first user on the first target message unit, update the display of the first target message unit to preset message content; or cancel the display of the first target message unit, and update display positions of remaining message units in the target conversation message.

Optionally, the conversation message interface includes a conversation message display region and a conversation message input region.

The apparatus further includes:
a third display module, configured to display message content of the first target message unit in the conversation message input region;
a fourth display module, configured to update the message content of the first target message unit in response to a fourth input by the first user on the message content of the first target message unit displayed in the conversation message input region; and
a fifth display module, configured to update the target conversation message displayed in the conversation message display region by using the updated message content of the first target message unit.

Optionally, the conversation message interface includes a conversation message display region and a conversation message input region. The second display module includes:
a fifth display unit, configured to: in a case that the target message recall mode is the second partial recall mode, display message content of the target conversation message in the conversation message input region in response to the first input by the first user on the target conversation message displayed in the conversation message display region; and
a sixth display unit, configured to update, in response to a fifth input by the first user on target message content of the message content of the target conversation message, the target conversation message displayed in the conversation message display region by using the target message content.

Optionally, the fifth display unit includes:
a third display subunit, configured to update the display of the message content of the target conversation message displayed in the conversation message input region to at least two second message units; and
the sixth display unit includes:
   a fourth display subunit, configured to update, in response to a fifth input by the first user on a second target message unit of the at least two second message units, the target conversation message displayed in the conversation message display region by using the second target message unit.

Optionally, the second display module further includes:
a seventh display unit, configured to update the display of the at least two first message units to at least two third message units in response to a sixth input by the first user on the target conversation message; and
an eighth display unit, configured to cancel, in response to a seventh input by the first user on a third target message unit of the at least two third message units, display of the third target message unit in the target conversation message.

Message lengths of the third message unit and the first message unit are different.

Optionally, the target message recall mode includes a partial user recall mode, and the partial user recall mode includes a first partial user recall mode. The target conversation is a group conversation in an instant messaging application.

The apparatus further includes:
a sixth display module, configured to: in a case that the target message recall mode is the first partial user recall mode, display conversation member identifiers of conversation members participating in the group conversation in response to the first input by the first user on the target conversation message of the conversation messages; and
a first sending module, configured to send, in response to an eighth input by the first user on a target conversation member identifier of the conversation member identifiers, first recall indication information to a target instant messaging application logged in with the target conversation member identifier, where the first recall indication information is used for instructing an electronic device running the target instant messaging application to cancel the display of the target conversation message.

Optionally, the target message recall mode includes a partial user recall mode, and the partial user recall mode includes a second partial user recall mode. The target conversation is a group conversation in an instant messaging application.

The apparatus further includes:
a seventh display module, configured to: in a case that the target message recall mode is the second partial user recall mode, update the display of the target conversation message to at least two fourth message units in response to the first input by the first user on the target conversation message of the conversation messages; and
a second sending module, configured to send, in response to a ninth input by the first user on a fourth target message unit of the at least two fourth message units and a tenth input on a target conversation member identifier corresponding to a target conversation member of conversation members participating in the group conversation, second recall indication information to a target instant messaging application logged in with the target conversation member identifier, where the second recall indication information is used for instructing an electronic device running the target instant messaging application to cancel display of the fourth target message unit.

Optionally, the target conversation message includes at least two conversation messages.

The second display module includes:
a ninth display unit, configured to: in a case that the target message recall mode is a batch recall mode, cancel display of the at least two conversation messages in the conversation message interface in response to a first input by the first user on the at least two conversation messages.

Optionally, the conversation message interface includes a conversation message display region and a conversation message input region.

The apparatus further includes:
an eighth display module, configured to display message content of the at least two conversation messages in the conversation message input region based on a display order of the at least two conversation messages in the conversation message display region;
a ninth display module, configured to update message content of at least two target conversation messages in response to an eleventh input by the first user on message content of the at least two conversation messages displayed in the conversation message input region; and
a tenth display module, configured to update the target conversation message displayed in the conversation message display region by using the updated message content of the at least two target conversation messages.

Optionally, the apparatus further includes:
an eleventh display module, configured to display message update reminder information in the conversation message interface, where the message update reminder information is used for a second user participating in the target conversation to initiate a target conversation message viewing request, and the target conversation message viewing request is used for requesting to view the target conversation message before the update.

Optionally, the apparatus further includes:
a twelfth display module, configured to locate a display position of the updated target conversation message in the conversation message interface in response to a twelfth input by the first user on the message update reminder information.

In the embodiments of this application, after the first input by the first user on the target conversation message is received, the display of the target conversation message is updated based on the target message recall mode, that is, functions such as recalling and resending the target conversation message are implemented. The target message recall mode includes a batch recall mode, a partial recall mode, or a partial user recall mode. Therefore, users can select different target message recall modes based on individual requirements, to meet different recall requirements of the users for the target conversation message, thereby simplifying a recall operation process, and improving the conversation communication efficiency.

The message processing apparatus in this embodiment of this application may be an electronic device, or may be a component in the electronic device, for example, an integrated circuit or a chip. The electronic device may be a terminal or a device other than the terminal. For example, the electronic device may be a mobile phone, a tablet computer, a notebook computer, a palm computer, an in-vehicle electronic device, a mobile internet device (Mobile Internet Device, MID), an augmented reality (augmented reality, AR)/a virtual reality (virtual reality, VR) device, a robot, a wearable device, an ultra-mobile personal computer (ultra-mobile personal computer, UMPC), a netbook, a personal digital assistant (personal digital assistant, PDA), or the like; or may be a personal computer (personal computer, PC), a television (television, TV), a teller machine, a self-service machine, or the like, which is not specifically limited in this embodiment of this application.

The message processing apparatus in this embodiment of this application may be an apparatus with an operating system. The operating system may be an Android (Android) operating system, an iOS operating system, or other possible operating systems, which is not specifically limited in this embodiment of this application.

The message processing apparatus provided in this embodiment of this application can implement all processes implemented in the method embodiments in FIG. 1 to FIG. 21. To avoid repetition, details are not described herein again.

Optionally, as shown in FIG. 23, an embodiment of this application further provides an electronic device 2300, including a processor 2301 and a memory 2302. The memory 2302 has a program or an instruction executable on the processor 2301 and stored therein. When the program or the instruction is executed by the processor 2301, the steps of the foregoing message processing method embodiments are implemented, and the same technical effects can be achieved. To avoid repetition, details are not described herein again.

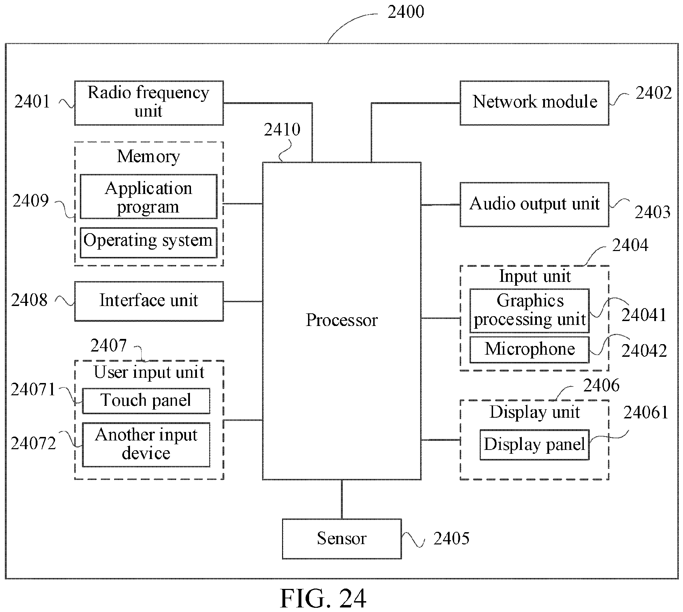

FIG. 24 is a schematic diagram of a hardware structure of an electronic device implementing the embodiments of this application.

The electronic device 2400 includes, but is not limited to: components such as a radio frequency unit 2401, a network module 2402, an audio output unit 2403, an input unit 2404, a sensor 2405, a display unit 2406, a user input unit 2407, an interface unit 2408, a memory 2409, and a processor 2410.

A person skilled in the art may understand that the electronic device 2400 may further include a power supply (such as a battery) for supplying power to the components. The power supply may be logically connected to the processor 2410 through a power management system, thereby implementing functions, such as charging, discharging, and power consumption management, through the power management system. The structure of the electronic device shown in FIG. 24 constitutes no limitation on the electronic device, and the electronic device may include more or fewer components than those shown in the figure, or some components may be combined, or a different component deployment may be used. Details are not described herein.

The display unit 2406 is configured to display a conversation message interface of a target conversation in which a first user participates, where the conversation message interface includes conversation messages sent by the first user.

The processor 2410 is configured to update, in response to a first input by the first user on a target conversation message of the conversation messages, display of the target conversation message based on a target message recall mode.

The target message recall mode includes: a batch recall mode, a partial recall mode, or a partial user recall mode.

Optionally, the display unit 2406 is further configured to display message recall mode options in response to the first input by the first user on the target conversation message of the conversation messages; and
the processor 2410 is further configured to update, in response to a second input by the first user on a target message recall mode option of the message recall mode options, the display of the target conversation message based on a target message recall mode corresponding to the target message recall mode option.

Optionally, the display unit 2406 is further configured to display a message recall mode option matching a message type of the target conversation message in response to the first input by the first user on the target conversation message of the conversation messages.

Optionally, the target message recall mode includes a partial recall mode, and the partial recall mode includes a first partial recall mode and a second partial recall mode.

The display unit 2406 is further configured to: in a case that the target message recall mode is the first partial recall mode, update the display of the target conversation message to at least two first message units in response to the first input by the first user on the target conversation message of the conversation messages; and
cancel, in response to a third input by the first user on a first target message unit of the at least two first message units, display of the first target message unit in the target conversation message.

Optionally, the user input unit 2407 is further configured to: in response to the third input by the first user on the first target message unit, update the display of the first target message unit as preset message content; or cancel the display of the first target message unit, and update display position of remaining message units in the target conversation message.

Optionally, the conversation message interface includes a conversation message display region and a conversation message input region.

The user input unit 2407 is further configured to display message content of the first target message unit in the conversation message input region;
the processor 2410 is further configured to update the message content of the first target message unit in response to a fourth input by the first user on the message content of the first target message unit displayed in the conversation message input region; and
the processor 2410 is further configured to update the target conversation message displayed in the conversation message display region by using the updated message content of the first target message unit.

Optionally, the conversation message interface includes a conversation message display region and a conversation message input region.

The display unit 2406 is further configured to: in a case that the target message recall mode is the second partial recall mode, display message content of the target conversation message in the conversation message input region in response to the first input by the first user on the target conversation message displayed in the conversation message display region; and
the display unit 2406 is further configured to update, in response to a fifth input by the first user on target message content of the message content of the target conversation message, the target conversation message displayed in the conversation message display region by using the target message content.

Optionally, the display unit 2406 is further configured to update the display of the message content of the target conversation message displayed in the conversation message input region to at least two second message units; and
the display unit 2406 is further configured to update, in response to a fifth input by the first user on a second target message unit of the at least two second message units, the target conversation message displayed in the conversation message display region by using the second target message unit.

Optionally, the display unit 2406 is further configured to update the display of the at least two first message units to at least two third message units in response to a sixth input by the first user on the target conversation message; and
the display unit 2406 is further configured to cancel, in response to a seventh input by the first user on a third target message unit of the at least two third message units, display of the third target message unit in the target conversation message.

Message lengths of the third message unit and the first message unit are different.

Optionally, the target message recall mode includes a partial user recall mode, and the partial user recall mode includes a first partial user recall mode. The target conversation is a group conversation in an instant messaging application.

The display unit 2406 is further configured to: in a case that the target message recall mode is the first partial user recall mode, display conversation member identifiers of conversation members participating in the group conversation in response to the first input by the first user on the target conversation message of the conversation messages; and
the network module 2402 is configured to send, in response to an eighth input by the first user on a target conversation member identifier of the conversation member identifiers, first recall indication information to a target instant messaging application logged in with the target conversation member identifier, where the first recall indication information is used for instructing an electronic device running the target instant messaging application to cancel the display of the target conversation message.

Optionally, the target message recall mode includes a partial user recall mode, and the partial user recall mode includes a second partial user recall mode. The target conversation is a group conversation in an instant messaging application.

The display unit 2406 is further configured to: in a case that the target message recall mode is the second partial user recall mode, update the display of the target conversation message to at least two fourth message units in response to the first input by the first user on the target conversation message of the conversation messages; and
the network module 2402 is further configured to send, in response to a ninth input by the first user on a fourth target message unit of the at least two fourth message units and a tenth input on a target conversation member identifier corresponding to a target conversation member of conversation members participating in the group conversation, second recall indication information to a target instant messaging application logged in with the target conversation member identifier, where the second recall indication information is used for instructing an electronic device running the target instant messaging application to cancel display of the fourth target message unit.

Optionally, the target conversation message includes at least two conversation messages.

The display unit 2406 is further configured to: in a case that the target message recall mode is a batch recall mode, cancel display of the at least two conversation messages in the conversation message interface in response to a first input by the first user on the at least two conversation messages.

Optionally, the conversation message interface includes a conversation message display region and a conversation message input region.

The display unit 2406 is further configured to display message content of the at least two conversation messages in the conversation message input region based on a display order of the at least two conversation messages in the conversation message display region;
the processor 2410 is further configured to update message content of at least two target conversation messages in response to an eleventh input by the first user on message content of the at least two conversation messages displayed in the conversation message input region; and
the processor 2410 is further configured to update the target conversation message displayed in the conversation message display region by using the updated message content of the at least two target conversation messages.

Optionally, the display unit 2406 is further configured to display message update reminder information in the conversation message interface. The message update reminder information is used for a second user participating in the target conversation to initiate a target conversation message viewing request, and the target conversation message viewing request is used for requesting to view the target conversation message before the update.

Optionally, the display unit 2406 is further configured to locate a display position of the updated target conversation message in the conversation message interface in response to a twelfth input by the first user on the message update reminder information.

In the embodiments of this application, after the first input by the first user on the target conversation message is received, the display of the target conversation message is updated based on the target message recall mode, that is, functions such as recalling and resending the target conversation message are implemented. The target message recall mode includes a batch recall mode, a partial recall mode, or a partial user recall mode. Therefore, users can select different target message recall modes based on individual requirements, to meet different recall requirements of the users for the target conversation message, thereby simplifying a recall operation process, and improving the conversation communication efficiency.

It should be understood that in this embodiment of this application, the input unit 2404 may include a graphics processing unit (Graphics Processing Unit, GPU) 24041 and a microphone 24042. The graphics processing unit 24041 performs processing on image data of a static picture or a video that is obtained by an image capture apparatus (for example, a camera) in a video capture mode or an image capture mode. The display unit 2406 may include a display panel 24061. The display panel 24061 may be configured in a form of a liquid crystal display, an organic light-emitting diode, or the like. The user input unit 2407 includes at least one of a touch panel 24071 and another input device 24072. The touch panel 24071 is also referred to as a touchscreen. The touch panel 24071 may include two parts: a touch detection apparatus and a touch controller. The another input device 24072 may include, but is not limited to, a physical keyboard, a functional key (such as a volume control key or a switch key), a track ball, a mouse, and a joystick, which are not described herein in detail.

The memory 2409 may be configured to store a software program and various data. The memory 2409 may mainly include a first storage region that stores a program or an instruction and a second storage region that stores data. The first storage region may store an operating system, an application program or an instruction required by at least one function (such as a sound playback function and an image display function), and the like. In addition, the memory 2409 may include a volatile memory or a non-volatile memory, or the memory 2409 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DR RAM). The memory 2409 in this embodiment of this application includes, but is not limited to, these memories and any other suitable types of memories.

The processor 2410 may include one or more processing units. Optionally, the processor 2410 integrates an application processor and a modem, where the application processor mainly processes operations involving an operating system, a user interface, an application program, and the like, and the modem mainly processes wireless communication signals, such as a baseband processor. It may be understood that, the modem may not be integrated into the processor 2410.

An embodiment of this application further provides a readable storage medium. The readable storage medium has a program or an instruction stored therein. When the program or the instruction is executed by a processor, the processes of the foregoing message processing method embodiments are implemented, and the same technical effects can be achieved. To avoid repetition, details are not described herein again.

The processor is the processor in the electronic device in the foregoing embodiments. The readable storage medium includes a computer-readable storage medium, such as a computer read-only memory, a random access memory, a magnetic disk, an optical disc, or the like.

An embodiment of this application further provides a chip. The chip includes a processor and a communication interface. The communication interface is coupled to the processor. The processor is configured to execute a program or an instruction, to implement the processes of the foregoing message processing method embodiments, and the same technical effects can be achieved. To avoid repetition, details are not described herein again.

It should be understood that the chip mentioned in this embodiment of this application may also be referred to as a system-level chip, a system chip, a chip system, a system on a chip, or the like.

An embodiment of this application provides a computer program/program product. The program/program product is stored in a storage medium. The program/program product is executed by at least one processor, to implement the processes of the foregoing message processing method embodiments, and the same technical effects can be achieved. To avoid repetition, details are not described herein again.

It should be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one...... does not exclude that there are still other same elements in the processes, methods, objects, or apparatuses. In addition, it should be noted that the scope of the method and apparatus in the implementations of this application is not limited to performing functions in the order shown or discussed, and may further include performing functions in a substantially simultaneous manner or in a reverse order based on the functions involved. For example, the described methods may be performed in an order different from the described order, and various steps may be added, omitted, or combined. In addition, features described with reference to some examples may be combined in other examples.

Through the descriptions of the foregoing implementations, a person skilled in the art may clearly understand that the method according to the foregoing embodiments may be implemented by using software and a necessary general hardware platform, and certainly, may alternatively be implemented by using hardware, but in many cases, the former manner is a better implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc) and includes several instructions for instructing a terminal (which may be a mobile phone, a computer, a server, a network device, or the like) to perform the methods described in the embodiments of this application.

The embodiments of this application are described above with reference to the accompanying drawings, but this application is not limited to the specific implementations described above. The specific implementations described above are merely exemplary but not limitative. A person of ordinary skill in the art can make various variations under the inspiration of this application without departing from the purpose of this application and the protection scope of the claims, and such variations shall all fall within the protection scope of this application.

## Claims

1. A message processing method, applied to a message sender, the method comprising:
displaying a conversation message interface of a target conversation in which a first user participates, wherein the conversation message interface comprises conversation messages sent by the first user; and
updating, in response to a first input by the first user on a target conversation message of the conversation messages, display of the target conversation message based on a target message recall mode, wherein
the target message recall mode comprises: a batch recall mode, a partial recall mode, or a partial user recall mode.

2. The method according to claim 1, wherein the updating, in response to a first input by the first user on a target conversation message of the conversation messages, display of the target conversation message based on a target message recall mode comprises:
displaying message recall mode options in response to the first input by the first user on the target conversation message of the conversation messages; and
updating, in response to a second input by the first user on a target message recall mode option of the message recall mode options, the display of the target conversation message based on a target message recall mode corresponding to the target message recall mode option.

3. The method according to claim 2, wherein the displaying message recall mode options in response to the first input by the first user on the target conversation message of the conversation messages comprises:
displaying a message recall mode option matching a message type of the target conversation message in response to the first input by the first user on the target conversation message of the conversation messages.

4. The method according to claim 1, wherein the target message recall mode comprises a partial recall mode, and the partial recall mode comprises a first partial recall mode and a second partial recall mode; and
the updating, in response to a first input by the first user on a target conversation message of the conversation messages, display of the target conversation message based on a target message recall mode comprises:
in a case that the target message recall mode is the first partial recall mode, updating the display of the target conversation message to at least two first message units in response to the first input by the first user on the target conversation message of the conversation messages; and
canceling, in response to a third input by the first user on a first target message unit of the at least two first message units, display of the first target message unit in the target conversation message.

5. The method according to claim 4, wherein the canceling, in response to a third input by the first user on a first target message unit of the at least two first message units, display of the first target message unit in the target conversation message comprises:
in response to the third input by the first user on the first target message unit, updating the display of the first target message unit to preset message content; or canceling the display of the first target message unit, and updating a display positions of remaining message units in the target conversation message.

6. The method according to claim 4, wherein the conversation message interface comprises a conversation message display region and a conversation message input region; and
the method further comprises:
displaying message content of the first target message unit in the conversation message input region;
updating the message content of the first target message unit in response to a fourth input by the first user on the message content of the first target message unit displayed in the conversation message input region; and
updating the target conversation message displayed in the conversation message display region by using the updated message content of the first target message unit.

7. The method according to claim 4, wherein the conversation message interface comprises a conversation message display region and a conversation message input region; and the updating, in response to a first input by the first user on a target conversation message of the conversation messages, display of the target conversation message based on a target message recall mode comprises:
in a case that the target message recall mode is the second partial recall mode, displaying message content of the target conversation message in the conversation message input region in response to the first input by the first user on the target conversation message displayed in the conversation message display region; and
updating, in response to a fifth input by the first user on target message content of the message content of the target conversation message, the target conversation message displayed in the conversation message display region by using the target message content.

8. The method according to claim 7, wherein the displaying message content of the target conversation message in the conversation message input region comprises:
updating the display of the message content of the target conversation message displayed in the conversation message input region to at least two second message units; and
the updating, in response to a fifth input by the first user on target message content of the message content of the target conversation message, the target conversation message displayed in the conversation message display region by using the target message content comprises:
updating, in response to a fifth input by the first user on a second target message unit of the at least two second message units, the target conversation message displayed in the conversation message display region by using the second target message unit.

9. The method according to claim 4, wherein after the updating the display of the target conversation message to at least two first message units in response to the first input by the first user on the target conversation message of the conversation messages, the method further comprises:
updating the display of the at least two first message units to at least two third message units in response to a sixth input by the first user on the target conversation message; and
canceling, in response to a seventh input by the first user on a third target message unit of the at least two third message units, display of the third target message unit in the target conversation message, wherein
message lengths of the third message unit and the first message unit are different.

10. The method according to claim 1, wherein the target message recall mode comprises a partial user recall mode, and the partial user recall mode comprises a first partial user recall mode; the target conversation is a group conversation in an instant messaging application; and
the method further comprises:
in a case that the target message recall mode is the first partial user recall mode, displaying conversation member identifiers of conversation members participating in the group conversation in response to the first input by the first user on the target conversation message of the conversation messages; and
sending, in response to an eighth input by the first user on a target conversation member identifier of the conversation member identifiers, first recall indication information to a target instant messaging application logged in with the target conversation member identifier, wherein the first recall indication information is used for instructing an electronic device running the target instant messaging application to cancel the display of the target conversation message.

11. The method according to claim 1, wherein the target message recall mode comprises a partial user recall mode, and the partial user recall mode comprises a second partial user recall mode; the target conversation is a group conversation in an instant messaging application; and
the method further comprises:
in a case that the target message recall mode is the second partial user recall mode, updating the display of the target conversation message to at least two fourth message units in response to the first input by the first user on the target conversation message of the conversation messages; and
sending, in response to a ninth input by the first user on a fourth target message unit of the at least two fourth message units and a tenth input on a target conversation member identifier corresponding to a target conversation member of conversation members participating in the group conversation, second recall indication information to a target instant messaging application logged in with the target conversation member identifier, wherein the second recall indication information is used for instructing an electronic device running the target instant messaging application to cancel display of the fourth target message unit.

12. The method according to claim 1, wherein the target conversation message comprises at least two conversation messages; and
the updating, in response to a first input by the first user on a target conversation message of the conversation messages, display of the target conversation message based on a target message recall mode comprises:
in a case that the target message recall mode is a batch recall mode, canceling display of the at least two conversation messages in the conversation message interface in response to a first input by the first user on the at least two conversation messages.

13. The method according to claim 12, wherein the conversation message interface comprises a conversation message display region and a conversation message input region; and
the method further comprises:
displaying message content of the at least two conversation messages in the conversation message input region based on a display order of the at least two conversation messages in the conversation message display region;
updating message content of at least two target conversation messages in response to an eleventh input by the first user on the message content of the at least two conversation messages displayed in the conversation message input region; and
updating the target conversation message displayed in the conversation message display region by using the updated message content of the at least two target conversation messages.

14. The method according to claim 1, wherein after the updating, in response to a first input by the first user on a target conversation message of the conversation messages, display of the target conversation message based on a target message recall mode, the method further comprises:
displaying message update reminder information in the conversation message interface, wherein the message update reminder information is used for a second user participating in the target conversation to initiate a target conversation message viewing request, and the target conversation message viewing request is used for requesting to view the target conversation message before the update.

15. The method according to claim 14, wherein the method further comprises:
locating a display position of the updated target conversation message in the conversation message interface in response to a twelfth input by the first user on the message update reminder information.

16. A message processing apparatus, applied to a message sender, the apparatus comprising:
a first display module, configured to display a conversation message interface of a target conversation in which a first user participates, wherein the conversation message interface comprises conversation messages sent by the first user; and
a second display module, configured to update, in response to a first input by the first user on a target conversation message of the conversation messages, display of the target conversation message based on a target message recall mode, wherein
the target message recall mode comprises: a batch recall mode, a partial recall mode, or a partial user recall mode.

17. The apparatus according to claim 16, wherein the second display module comprises:
a first display unit, configured to display message recall mode options in response to the first input by the first user on the target conversation message of the conversation messages; and
a second display unit, configured to update, in response to a second input by the first user on a target message recall mode option of the message recall mode options, the display of the target conversation message based on a target message recall mode corresponding to the target message recall mode option.

18. The apparatus according to claim 17, wherein the first display unit comprises:
a first display subunit, configured to display a message recall mode option matching a message type of the target conversation message in response to the first input by the first user on the target conversation message of the conversation messages.

19. An electronic device, comprising a processor and a memory, wherein the memory has a program or an instruction executable on the processor and stored therein, and when the program or the instruction is executed by the processor, a message processing method applied to a message sender is implemented, the method comprising:
displaying a conversation message interface of a target conversation in which a first user participates, wherein the conversation message interface comprises conversation messages sent by the first user; and
updating, in response to a first input by the first user on a target conversation message of the conversation messages, display of the target conversation message based on a target message recall mode, wherein
the target message recall mode comprises: a batch recall mode, a partial recall mode, or a partial user recall mode.

20. A readable storage medium, wherein the readable storage medium has a program or an instruction stored therein, and when the program or the instruction is executed by a processor, a message processing method applied to a message sender is implemented, the method comprising:
displaying a conversation message interface of a target conversation in which a first user participates, wherein the conversation message interface comprises conversation messages sent by the first user; and
updating, in response to a first input by the first user on a target conversation message of the conversation messages, display of the target conversation message based on a target message recall mode, wherein
the target message recall mode comprises: a batch recall mode, a partial recall mode, or a partial user recall mode.
